# EUROPÄISCHE PATENTSCHRIFT

(11) **EP 3 247 520 B1**
(45) Veröffentlichungstag und Bekanntmachung des Hinweises auf die Patenterteilung: **03.07.2019**
(21) Anmeldenummer: 16716824.4
(22) Anmeldetag: 29.03.2016
(51) Int. Cl.: B23C 3/00, B23C 5/10, G05B 19/4061

(54) **VERFAHREN ZUR MATERIALABTRAGENDEN BEARBEITUNG VON EBENEN FLÄCHEN EINES WERKSTÜCKES**
METHOD FOR MACHINING FLAT SURFACES OF A WORKPIECE
PROCÉDÉ D'USINAGE PAR ENLÈVEMENT DE MATIÈRE DE SURFACES PLANES D'UNE PIÈCE

(30) Priorität: 26.03.2015 DE 102015104679
(43) Veröffentlichungstag der Anmeldung: 29.11.2017
(73) Patentinhaber: OPEN MIND Technologies AG, 82234 Wessling (DE)
(72) Erfinder: BRAMBS, Peter, 80803 München (DE); KOCH, Josef, 81371 München (DE)
(74) Vertreter: Thum, Bernhard
(86) Internationale Anmeldenummer: PCT/EP2016/000527
(87) Internationale Veröffentlichungsnummer: WO 2016/150575

(56) Entgegenhaltungen:
- EP-A1- 0 316 807
- WO-A1-2004/104715
- WO-A2-01/78943
- DE-A1- 10 144 508
- JP-A- H08 252 713
- JP-A- 2007 229 849
- JP-A- 2011 183 528
- JP-A- 2011 251 401

## Beschreibung

Die Erfindung betrifft Verfahren zur materialabtragenden Bearbeitung von ebenen Flächen eines Werkstückes mittels eines Werkzeuges, insbesondere eines Fräswerkzeuges.

Trotz der einfachen Geometrie ebener Flächen existieren viele verschiedene Bearbeitungsstrategien, die sich unter anderem in Bezug auf die verwendeten Werkzeuge, die technischen Anforderungen, die Fertigungsdauer und die erreichbare Oberflächenqualität unterscheiden. Solche ebenen Flächen bzw. Ebenen sind insbesondere im Werkzeug- und Formenbau an vielen Bauteilen wiederzufinden.

So findet zur Bearbeitung von ebenen Flächen vielfach das Stirnfräsen Verwendung. Dabei wird ein zylindrischer Schaft- oder Radiusfräser, ein Schaftfräser mit abgerundeter Spitze, mit der Stirnseite über die Ebene bewegt. Es wird zum Beispiel konturparallel oder zeilenweise, mit gleichbleibender oder alternierender Richtung, gearbeitet. Im Bereich der Taschenbearbeitung, wie beispielsweise in der US 2013/0151000 A1 oder der US 8,489,224 B2 beschrieben, bei der eine Ebene am Boden die wesentliche Geometrie definiert, kommen auch komplexere Bahnformen, wie Spiralen und Trochoiden, zum Einsatz. Das Werkzeug steht beim Stirnfräsen im Wesentlichen senkrecht auf der Ebene, kann aber zur Anpassung der Schnittbedingungen geringfügig in Vorschubrichtung und/oder seitlich dazu angestellt werden. Gleichwohl sich das Stirnfräsen in der Praxis bei der Bearbeitung von frei zugänglichen bzw. "freistehenden" Ebenen bewährt hat, sind dem Stirnfräsen einige Nachteile inhärent. Zum einen ist eine Bearbeitung von Ebenen, deren Bearbeitung durch angrenzende Flächen behindert wird, nur sehr begrenzt möglich, wenn nicht ganz ausgeschlossen. Droht beispielsweise eine Kollision des Werkzeughalters mit einer an die zu bearbeitende Ebene angrenzenden Fläche, müsste die Ausspannlänge, d.h. die Länge, um welche das Werkzeug aus dem Halter herausragt, vergrößert werden, was die Stabilität bei Beibehaltung des Werkzeugdurchmessers beeinträchtigt. Eine Bearbeitung einer Tasche etwa, bestehend aus drei oder mehr aneinander grenzenden ebenen Seitenwänden und einer Bodenfläche, mittels Stirnfräsens ist unmöglich, da das Werkzeug einschließlich Halter und gegebenenfalls weiteren Komponenten, wie die Spindel etc., im Inneren der Tasche zumeist keinen Platz findet. Zum anderen muss das Werkzeug bei Bearbeitung von seitlichen Ebenen eines Werkstückes um 90° geschwenkt werden. Bei einem großen Werkstück verbleibt im Arbeitsraum der Maschine jedoch oftmals nicht genügend Platz, um das geschwenkte Werkzeug mit Halter und den weiteren Komponenten zu positionieren. Ein personal-, zeit- und damit kostenaufwendiges Umspannen des Werkstückes ist die Folge.

Alternativ kommt das Stechen zur Bearbeitung von ebenen Flächen zum Einsatz. Dabei wird in aller Regel ein Schaftfräser in mehreren Durchgängen entlang seiner Achse vertikal von oben nach unten an der zu bearbeitenden Ebene entlanggeführt, wobei das Werkzeug unter Umständen auch mit einem gewissen Anstellwinkel zur Ebene bewegt werden kann. Allerdings weist auch das Stechen in der Praxis erhebliche Nachteile auf. Bei ausreichend langem Werkzeug und gegebener vertikaler Zugänglichkeit lassen sich zwar selbst Ebenen, die beim Stirnfräsen nur schwer zu erreichen sind, bearbeiten. Ein derartig langes Werkzeug unterliegt jedoch vielfach einer hohen Abdrängung und der Gefahr einer instabilen Bearbeitung insgesamt. Falls hingegen für die Ebene ein ausreichend langes Werkzeug nicht eingesetzt werden kann, zum Beispiel weil die vertikale Zugänglichkeit nicht gegeben ist, sind eine Kollision des Halters unvermeidbar und eine vollständige Bearbeitung unmöglich. Zudem erfordert das Stechen eine sehr hohe Anzahl vertikaler Durchgänge, um eine gewisse Oberflächengenauigkeit zu erreichen, zumal der Durchmesser des Werkzeuges nicht zu groß sein darf, um auch Ecken bearbeiten zu können.

Darüber hinaus ist das Wälzfräsen bekannt, das vornehmlich für die Bearbeitung von Ebenen und Freiformflächen verwendet wird, wie beispielhaft aus der US 5 391 024 A und US 2015/0032250 A1 entnehmbar ist. Ein zylindrischer Schaftfräser wird dabei parallel zu einer zu bearbeitenden Ebene oder Freiformfläche ausgerichtet, in Kontakt gebracht und orthogonal zu seiner Achse bewegt. Somit wird vorrangig mit der Flanke des Werkzeuges gearbeitet. Das Wälzfräsen ermöglicht aufgrund des daraus resultierenden großen Eingriffsbereichs zwar größere Schrittweiten als das Stirnfräsen oder Stechen. Allerdings hat sich das Wälzfräsen in der Praxis zur Bearbeitung von Ebenen aufgrund der Kollisions- und Stabilitätsproblematik ebenfalls als verhältnismäßig nachteilig erwiesen. Aufgrund der Ausrichtung des Werkzeuges parallel zur Ebene muss die Ausspannlänge mindestens der Höhe der Ebene entsprechen, um diese vollständig und kollisionsfrei zu bearbeiten. Eine große Ausspannlänge vermindert allerdings erheblich die Stabilität des Werkzeuges und damit die Fräsqualität. Zur Verbesserung der Stabilität wurde dazu übergegangen, anstelle eines zylindrischen Schaftfräsers einen konischen Fräser, mit oder ohne kugelförmiger Stirnfläche, zu verwenden. Um das Werkzeug mit der Ebene in Kontakt zu bringen, ist eine Anstellung dessen erforderlich. Die konische Form des Werkzeuges in Verbindung mit der Schrägstellung führt zu einer geringeren Abdrängung, da ein Teil der Schneidkräfte in Richtung der Werkzeugachse abgeleitet werden kann. Die reduzierte Abdrängung ermöglicht zwar größere Ausspannlängen. Doch ist der schräg gestellte Werkzeughalter aufgrund des meist kleinen Konuswinkels zur Kollisionsvermeidung im Allgemeinen nicht ausreichend weit von der Ebene entfernt. Bei ungünstiger Lage der an die Ebene angrenzenden Flächen gibt es gegebenenfalls keine Möglichkeit, das Werkzeug in Kontakt mit der Ebene zu bringen, ohne eine Kollision des Halters mit den angrenzenden Flächen herbeizuführen. Besonders nachteilig sind darüber hinaus die abrupten Übergänge zwischen der konischen Schneide und dem Schaft bzw. der flachen oder kugelförmigen Stirnfläche. Die Übergänge können insbesondere bei vollständiger Auflage der Schneide zu unerwünschten streifenartigen Spuren an dem Werkstück führen, gerade auch dann, wenn die Schwenkachsen der verwendeten Fräsmaschine nicht ausreichend genau arbeiten.

Als eine weitere Strategie zur Ebenenbearbeitung ist auch das Abzeilen bekannt. Das Werkzeug steht senkrecht oder in einem gewissen Winkel zur ebenen Fläche und wird zeilenweise bewegt. Am häufigsten kommt hierbei ein Kugelfräser zum Einsatz. Eine solche zeilenweise Bearbeitung von ebenen Flächen ist beispielsweise in der JP 2011-251401 A beschrieben, wobei der Kugelfräser unter Verwendung eines Voreilwinkels bezüglich einer alternierenden Vorschubrichtung zur Verbesserung der Schnittbedingungen (Gleichlauffräsen) bewegt wird. Als besonders nachteilig hat sich beim Abzeilen in der Praxis die Notwendigkeit herausgestellt, dass das Werkzeug bzw. dessen kugelförmige Stirnfläche schmal genug sein muss, um auch enge Stellen bearbeiten zu können. Außerdem ist ein verhältnismäßig kleiner Abstand der Bearbeitungszeilen erforderlich, um eine vorgegebene Oberflächengenauigkeit zu ermöglichen. Beides resultiert in einer großen Anzahl von Bahnen und einer entsprechend langen Bearbeitungszeit. Das Abzeilen zur Bearbeitung von ebenen Flächen ist daher oft ineffizient und damit nicht zuletzt verhältnismäßig kostenaufwendig.

Zur Lösung der Kollisionsproblematik, wie sie bei vielen Bearbeitungsstrategien mit den verschiedenen Werkzeugen auftritt, ist in der JP 2011-183528 A weiterhin ein Verfahren vorgeschlagen, bei dem das Werkzeug an den jeweiligen Positionen der Werkzeugbahn gegenüber der zu bearbeitenden Fläche geneigt werden soll. Eine dabei einhergehende Änderung des Kontaktpunktes am Werkzeug bleibt unberücksichtigt und kann entsprechend der Art des Werkzeuges zu erheblichen Nachteilen führen. Des Weiteren besteht keine Möglichkeit, einerseits die Werkzeuganschmiegung gezielt zu steuern und andererseits davon unabhängig Maßnahmen zur Kollisionsvermeidung zu treffen. Zudem dient die Neigung des Werkzeuges ausschließlich dazu, Kollisionen mit der zu bearbeitenden ebenen Fläche selbst, nicht aber mit angrenzenden Flächen zu verhindern.

Im Ergebnis weisen diese bekannten Fräsverfahren erhebliche Nachteile hinsichtlich der technischen Ausführbarkeit, den Möglichkeiten zur Kollisionsvermeidung, der Stabilität und der Effizienz sowie damit einhergehend des Kostenaufwandes auf.

Aus der DE 101 44 508 A1 ist ein Verfahren zur materialabtragenden Bearbeitung eines Werkstückes mittels eines Werkzeuges, insbesondere eines Fräswerkzeuges, mit den Merkmalen des Oberbegriffes des unabhängigen Anspruchs 1 bekannt. Zur Vermeidung von Kollisionen der Werkzeughalterung des Fräswerkzeuges mit höher liegenden Wandabschnitten des Werkstückes in Nähe des Bodenbereiches wird die Rotationsachse des Fräswerkzeuges mitsamt dessen Werkzeughalterung um einen Anstellwinkel schräg gestellt.

Darüber hinaus beschreibt die JP H08 252713 A ein Werkzeug mit einer Schneidenkontur in Form eines Rotationsparaboloids. Schließlich ist aus der JP 2007 229849 A noch ein Werkzeug mit einer kreisbogenförmigen Schneidenkontur bekannt, das zur Bearbeitung einer konkav gekrümmten Struktur bestimmt ist, wobei zur Kollisionsvermeidung zwischen dem Werkzeug und dem Rand der konkav gekrümmten Struktur der Winkel zwischen dem Werkzeug und der zu bearbeitenden Fläche verändert werden soll.

Der vorliegenden Erfindung liegt nun die Aufgabe zugrunde, ein Verfahren zur materialabtragenden Bearbeitung von ebenen Flächen eines Werkstückes mittels eines Werkzeuges, insbesondere eines Fräswerkzeuges, zur Verfügung zu stellen, mit welchem sich die obigen Nachteile verhindern lassen, welches mithin eine besonders einfache, schnelle und zugleich praktikable, effiziente sowie kollisionsfreie Bearbeitung von ebenen Flächen bzw. Ebenen ermöglicht, Werkstücke mit einer ausgesprochen hohen Oberflächengüte erreichen lässt und damit einhergehend zu einer erheblichen Reduzierung von Betriebs- und Fertigungskosten insgesamt führt.

Diese Aufgabe wird auf überraschend einfache Weise durch die Merkmale des Anspruchs 1 gelöst.

Durch die Ausgestaltung des erfindungsgemäßen Verfahrens zur materialabtragenden Bearbeitung von ebenen Flächen eines Werkstückes mittels eines Werkzeuges, insbesondere eines Fräswerkzeuges, das gegenüber einer ebenen Fläche seitlich geneigt, mit einem Kontaktpunkt auf der ebenen Fläche geführt und kollisionsfrei bewegt wird, wobei die ebene Fläche mittels eines Werkzeuges mit konisch-konvex ausgebildeter Schneidenkontur an einer Flanke des Werkzeuges und zur Vermeidung einer einseitigen Kollision vollständig von dem Werkzeug mit einem Schwenkwinkel parallel zu der ebenen Fläche und/oder zur Vermeidung einer zweiseitigen Kollision von dem Werkzeug mit mindestens zwei voneinander unterschiedlichen Schwenkwinkeln parallel zu der ebenen Fläche bearbeitet wird, wobei die ebene Fläche zur Vermeidung der zweiseitigen Kollision in mindestens zwei Bearbeitungssegmente aufgeteilt wird und jedem der mindestens zwei Bearbeitungssegmente ein individueller Schwenkwinkel des Werkzeuges zur Kollisionsvermeidung zugeordnet wird, werden eine besonders einfache, schnelle und zugleich praktikable, effiziente sowie kollisionsfreie Bearbeitung von ebenen Flächen bzw. Ebenen ermöglicht. Ein wesentlicher Vorteil des erfindungsgemäßen Verfahrens besteht in der Möglichkeit, auch besonders schwer zugängliche ebene Flächen bzw. Ebenen kollisionsfrei bearbeiten zu können, ohne die erhöhte Bearbeitungszeit bekannter Verfahren in Kauf nehmen zu müssen. Gleichzeitig lassen sich ebene Flächen bzw. Ebenen der Werkstücke mit einer ausgesprochen hohen Oberflächengüte erzielen. Schließlich trägt das erfindungsgemäße Verfahren zu einer erheblichen Reduzierung von Betriebs- und Fertigungskosten und damit des Kostenaufwandes insgesamt bei der Bearbeitung von ebenen Flächen bzw. Ebenen bei.

Von ganz besonders großer Bedeutung für das erfindungsgemäße Verfahren ist das Werkzeug, insbesondere das Fräswerkzeug, mit einer konisch-konvex ausgebildeten Schneidenkontur an einer Flanke des Werkzeuges, die mit einem Kontaktpunkt auf der ebenen Fläche bzw. Ebene geführt wird. Ein wesentlicher Vorteil des erfindungsgemäßen Verfahrens, der aus der konisch-konvexen Schneidenkontur resultiert, basiert auf dem sehr großen Eingriffsbereich des Werkzeuges, der sich bei geeigneter Anschmiegung an die zu bearbeitende ebene Fläche bzw. Ebene ergibt. Nicht zuletzt hieraus resultierend lässt sich mit dem erfindungsgemäßen Verfahren gegenüber sämtlichen herkömmlichen Verfahren eine erheblich größere Schrittweite bei Erreichung der gleichen Oberflächenqualität erzielen. Dies wiederum ermöglicht einen Zeitgewinn von bis zu 90 % und somit eine erhebliche Reduzierung des Kostenaufwandes insgesamt im Vergleich zu diesen sämtlichen herkömmlichen Verfahren. Darüber hinaus bietet das erfindungsgemäße Verfahren den Vorteil, dass die Endpunkte der Schneidenkontur an einer Flanke des erfindungsgemäßen Werkzeuges beim Anliegen der konisch-konvexen Schneidenkontur gegenüber einer flachen konischen Form an/auf der ebenen Fläche bzw. Ebene einen gewissen Abstand zur Oberfläche des Werkstückes aufweisen und somit keine Spuren hinterlassen. Besonders vorteilhaft ist weiter die mit dem erfindungsgemäßen Verfahren zu erzielende Toleranz gegenüber Winkelabweichungen der Maschine. Lässt sich beispielsweise eine vorgegebene Anstellung des Werkzeuges aufgrund von Ungenauigkeiten der Schwenkachsen der Maschine nicht genau einstellen, kann die konisch-konvexe bzw. geringfügig ausgebeulte konvexe Schneidenkontur an einer Flanke des erfindungsgemäßen Werkzeuges Winkelungenauigkeiten der Maschine kompensieren. So bleibt die Schneidenkontur an der Flanke des Werkzeuges fast unverändert im Eingriff mit dem Werkstück und produziert ein homogenes Fräsbild. Demgegenüber würden Winkelungenauigkeiten bei einer flachen konischen Schneidenkontur an der Flanke des Werkzeuges dazu führen, dass die Schneidenkontur nicht mehr exakt aufliegt, somit nicht gleichmäßig schneidet und bei zeilenweiser Bearbeitung unerwünschte Treppeneffekte an der Oberfläche des Werkstückes verursacht.

Weitere besonders vorteilhafte Einzelheiten des erfindungsgemäßen Verfahrens sind in den Ansprüchen 2 bis 17 beschrieben.

Entsprechend den Merkmalen des Anspruchs 2 wird das Werkzeug vorzugsweise gegenüber der ebenen Fläche seitlich geneigt, derart, dass der Kontaktpunkt der konisch-konvex ausgebildeten Schneidenkontur an der Flanke des Werkzeuges auf der ebenen Fläche in einem oberen, dem Schaft des Werkzeuges zugewandten Bereich liegt.

Darüber hinaus liegt es im Rahmen der Erfindung, dass nach Anspruch 3 vorzugsweise das Werkzeug zeilenweise von unten nach oben über die ebene Fläche geführt wird und gegenüber der ebenen Fläche seitlich geneigt wird, derart, dass der Kontaktpunkt der konisch-konvex ausgebildeten Schneidenkontur an der Flanke des Werkzeuges auf der ebenen Fläche in einem Bereich zwischen der Mitte der Schneidenkontur und einem oberen, dem Schaft des Werkzeuges zugewandten Bereich liegt.

Weiterhin ist vorzugsweise vorgesehen, dass entsprechend den Maßnahmen des Anspruchs 4 das Werkzeug zeilenweise von oben nach unten über die ebene Fläche geführt wird und gegenüber der ebenen Fläche seitlich geneigt wird, derart, dass der Kontaktpunkt der konisch-konvex ausgebildeten Schneidenkontur an der Flanke des Werkzeuges auf der ebenen Fläche in einem Bereich zwischen der Mitte der Schneidenkontur und einem unteren, der Stirnfläche bzw. Stirnseite bzw. Stirn des Werkzeuges zugewandten Bereich liegt.

Des Weiteren sind die Merkmale des Anspruchs 5 von Vorteil, wonach das Werkzeug gegenüber der ebenen Fläche seitlich geneigt wird, derart, dass der Kontaktpunkt der konisch-konvex ausgebildeten Schneidenkontur an der Flanke des Werkzeuges auf der ebenen Fläche in einem unteren, der Stirnfläche bzw. Stirnseite bzw. Stirn des Werkzeuges zugewandten Bereich liegt.

Vorzugsweise wird die seitliche Neigung des Werkzeuges nach Anspruch 6 gegenüber der ebenen Fläche während der gesamten Bearbeitung unverändert beibehalten.

Nach den Maßnahmen des Anspruchs 7 liegt es im Rahmen der Erfindung, dass die Kollisionsfreiheit und mögliche ein- und/ oder zweiseitige Kollisionen mit der Geometrie des Werkstückes geprüft werden.

Vorzugsweise wird/werden die Werkzeugbahn/en des Werkzeuges nach Anspruch 8 für die ebene Fläche und/oder die mindestens zwei Bearbeitungssegmente berechnet.

Von ganz besonderem Interesse sind die Maßnahmen des Anspruchs 9, wonach das Werkzeug zeilenweise über die ebene Fläche oder die mindestens zwei Bearbeitungssegmente der ebenen Fläche geführt wird.

In diesem Zusammenhang liegt es im Rahmen der Erfindung, dass das Werkzeug nach Anspruch 10 in horizontalen und/oder diagonalen Zeilen über die ebene Fläche oder die mindestens zwei Bearbeitungssegmente der ebenen Fläche geführt wird.

Von besonderem Vorteil sind die Merkmale des Anspruchs 11, wonach die ebene Fläche oder die mindestens zwei Bearbeitungssegmente der ebenen Fläche von dem Werkzeug zeilenweise bearbeitet wird/werden, wobei der Schwenkwinkel des Werkzeuges des mindestens einen Bearbeitungssegmentes kontinuierlich zu dem Schwenkwinkel des Werkzeuges des mindestens anderen Bearbeitungssegmentes interpoliert wird, und umgekehrt.

Vorzugsweise wird/werden die ebene Fläche oder die mindestens zwei Bearbeitungssegmente der ebenen Fläche nach Anspruch 12 mittels eines Werkzeuges, dessen konisch-konvex ausgebildete Schneidenkontur an der Flanke des Werkzeuges durch eine konische Kontur mit einem Konuswinkel zwischen der konischen Kontur und der Achse des Werkzeuges und eine von der konischen Kontur ausgehende konvexe Ausbeulung gebildet ist, bearbeitet.

Darüber hinaus wird/werden die ebene Fläche oder die mindestens zwei Bearbeitungssegmente der ebenen Fläche in vorteilhafter Weise nach Anspruch 13 mittels eines Werkzeuges, dessen konisch-konvex ausgebildete Schneidenkontur an der Flanke des Werkzeuges als Kreissegment oder Ellipsensegment mit einem großen Krümmungsradius, insbesondere ≥ 250 mm, vorzugsweise ≥ 500 mm, ausgebildet ist, bearbeitet.

Nach Anspruch 14 wird/werden die ebene Fläche oder die mindestens zwei Bearbeitungssegmente der ebenen Fläche mittels eines Werkzeuges, dessen konisch-konvex ausgebildete Schneidenkontur an der Flanke des Werkzeuges als Kreissegment, Ellipsensegment oder Kurvensegment mit einem konstanten oder variierenden Krümmungsradius R_{K} ausgebildet ist, bearbeitet.

Des Weiteren ist in ganz vorteilhafter Weise vorgesehen, dass die ebene Fläche oder die mindestens zwei Bearbeitungssegmente der ebenen Fläche nach Anspruch 15 mittels eines Werkzeuges, dessen konisch-konvex ausgebildete Schneidenkontur symmetrisch oder asymmetrisch an der Flanke des Werkzeuges ausgebildet ist, bearbeitet wird/werden. Vorzugsweise wird/werden die ebene Fläche oder die mindestens zwei Bearbeitungssegmente der ebenen Fläche entsprechend Anspruch 16 mittels eines Werkzeuges, dessen konisch-konvex ausgebildete Schneidenkontur an der Flanke des Werkzeuges unmittelbar in den Schaft des Werkzeuges übergeht, bearbeitet.

Vorzugsweise ist nach Anspruch 16 vorgesehen, die ebene Fläche oder die mindestens zwei Bearbeitungssegmente der ebenen Fläche mittels eines Werkzeuges, dessen konisch-konvex ausgebildete Schneidenkontur an der Flanke des Werkzeuges mittelbar über einen verrundeten Übergang in den Schaft des Werkzeuges übergeht, zu bearbeiten. Dieser verrundete Übergang bzw. die Verrundung verstärkt den bereits erwähnten Vorteil des erfindungsgemäßen Verfahrens noch zusätzlich, wonach die Endpunkte der Schneidenkontur des Werkzeuges beim Anliegen der konisch-konvexen Schneidenkontur an/auf der ebenen Fläche bzw. Ebene einen gewissen Abstand zur Oberfläche des Werkstückes aufweisen und somit keine Spuren auf dem bearbeiteten Werkstück hinterlassen. Darüber hinaus erleichtert der verrundete Übergang in vielen Fällen die Bearbeitung schwer zugänglicher Bereiche zwischen aneinander angrenzenden (ebenen) Flächen.

Schließlich liegt es noch im Rahmen der Erfindung, dass nach Anspruch 17 vorzugsweise die ebene Fläche oder die mindestens zwei Bearbeitungssegmente der ebenen Fläche mittels eines Werkzeuges, dessen konisch-konvex ausgebildete Schneidenkontur an der Flanke des Werkzeuges in eine flache Stirnfläche bzw. Stirnseite bzw. Stirn des Werkzeuges übergeht, bearbeitet wird/werden.

Alternativ kann/können die ebene Fläche oder die mindestens zwei Bearbeitungssegmente der ebenen Fläche schließlich auch entsprechend Anspruch 17 mittels eines Werkzeuges, dessen konisch-konvex ausgebildete Schneidenkontur an der Flanke des Werkzeuges in eine kugelförmige Stirnfläche bzw. Stirnseite bzw. Stirn des Werkzeuges übergeht, bearbeitet werden.

Weitere Merkmale, Vorteile und Einzelheiten der Erfindung ergeben sich aus der nachfolgenden Beschreibung von einigen bevorzugten Ausführungsformen der Erfindung sowie anhand der Zeichnungen. Hierbei zeigen:
- Fig. 1a und 1b: eine schematische, teilweise abgebrochene Seitenansicht einer Ausführungsform eines erfindungsgemäßen Werkzeuges, und eine schematische, teilweise abgebrochene Seitenansicht der Ausführungsform des erfindungsgemäßen Werkzeuges entsprechend der Fig. 1a, in vergrößerter Darstellung,
- Fig. 2a und 2b: schematische, teilweise abgebrochene Seitenansichten einer weiteren Ausführungsform eines Werkzeuges entsprechend den Fig. 1a und 1b,
- Fig. 3a und 3b: schematische, teilweise abgebrochene Seitenansichten einer anderen Ausführungsform eines erfindungsgemäßen Werkzeuges entsprechend den Fig. 1a und 2a,
- Fig. 4a und 4b: schematische, teilweise abgebrochene Seitenansichten einer noch anderen Ausführungsform eines erfindungsgemäßen Werkzeuges entsprechend den Fig. 1a und 2a,
- Fig. 5a bis 5c: eine schematische perspektivische Ansicht, eine Vorder- und eine Seitenansicht, jeweils teilweise abgebrochen, eines Werkstückes und eines erfindungsgemäß ausgebildeten Werkzeuges zur Erläuterung eines ersten Schrittes des erfindungsgemäßen Verfahrens,
- Fig. 6a bis 6d: schematische, teilweise abgebrochene Seitenansichten des Werkstückes und des erfindungsgemäßen Werkzeuges entsprechend der Fig. 5c, in vergrößerter Darstellung,
- Fig. 7: eine schematische perspektivische, teilweise abgebrochene Ansicht eines Werkstückes mit verschiedenen ebenen Flächen bzw. Ebenen,
- Fig. 8a bis 8c: schematische, teilweise abgebrochene Seitenansichten des Werkstückes entsprechend der Fig. 7 zusammen mit einem erfindungsgemäßen Werkzeuges mit unterschiedlicher seitlicher Neigung,
- Fig. 9a bis 9c: schematische perspektivische, teilweise abgebrochene Ansichten und eine Seitenansicht einer Ausführungsform eines Werkstückes mit einem erfindungsgemäßen Werkzeug zur Erläuterung eines zweiten Schrittes des erfindungsgemäßen Verfahrens,
- Fig. 10a bis 10g: schematische perspektivische, teilweise abgebrochene Ansichten und eine Seitenansicht einer anderen Ausführungsform eines Werkstückes mit einem erfindungsgemäßen Werkzeug entsprechend den Fig. 9a bis 9c, in verschiedenen Tiefenstellungen des Werkzeuges,
- Fig. 11a bis 11g: schematische perspektivische, teilweise abgebrochene Ansichten und eine Seitenansicht einer anderen Ausführungsform eines Werkstückes mit einem erfindungsgemäßen Werkzeug entsprechend den Fig. 9a bis 9c, in verschiedenen Tiefenstellungen des Werkzeuges,
- Fig. 12a bis 12g: schematische perspektivische, teilweise abgebrochene Ansichten und Seitenansichten der Ausführungsform des Werkstückes mit dem erfindungsgemäßen Werkzeug entsprechend den Fig. 9a bis 11g zur Erläuterung eines dritten Schrittes des erfindungsgemäßen Verfahrens,
- Fig. 13a bis 13f: schematische perspektivische, teilweise abgebrochene Ansichten und Seitenansichten der Ausführungsform des Werkstückes mit dem erfindungsgemäßen Werkzeug entsprechend den Fig. 11a bis 11g zur Erläuterung des dritten Schrittes des erfindungsgemäßen Verfahrens,
- Fig. 14a bis 14g: schematische perspektivische, teilweise abgebrochene Ansichten der Ausführungsform des Werkstückes mit dem erfindungsgemäßen Werkzeug entsprechend den Fig. 13a bis 13f zur Erläuterung eines abgeänderten dritten Schrittes des erfindungsgemäßen Verfahrens,
- Fig. 15a und 15b: schematische perspektivische, teilweise abgebrochene Ansichten der Ausführungsform des Werkstückes mit dem erfindungsgemäßen Werkzeug entsprechend den Fig. 13a bis 13f zur Erläuterung eines noch weiter abgeänderten dritten Schrittes des erfindungsgemäßen Verfahrens, und
- Fig. 16a bis 16f: schematische perspektivische, teilweise abgebrochene Ansichten der vorhergehenden Ausführungsformen des Werkstückes mit dem erfindungsgemäßen Werkzeug zur Erläuterung eines vierten Schrittes des erfindungsgemäßen Verfahrens, und
- Fig. 17a und 17b: eine schematische perspektivische Ansicht eines Werkstückes mit einer Tasche mit ebener Bodenfläche, und eine schematische, teilweise abgebrochene Seitenansicht eines Werkstückes mit einer Tasche mit ebener Bodenfläche gemäß Fig. 17a, zusammen mit einem erfindungsgemäßen Werkzeug gemäß Fig. 4a und 4b.

Bei der nachfolgenden Beschreibung von verschiedenen Ausführungsformen eines erfindungsgemäß ausgebildeten Werkzeuges 10 und eines erfindungsgemäßen Verfahrens zur materialabtragenden Bearbeitung mittels eines Werkzeuges 10 sind einander entsprechende, gleiche Bauteile jeweils mit identischen Bezugsziffern versehen. Das Werkzeug 10 kann ohne Einschränkung der Erfindung beispielsweise als Fräswerkzeug bzw. Fräser ausgebildet sein.

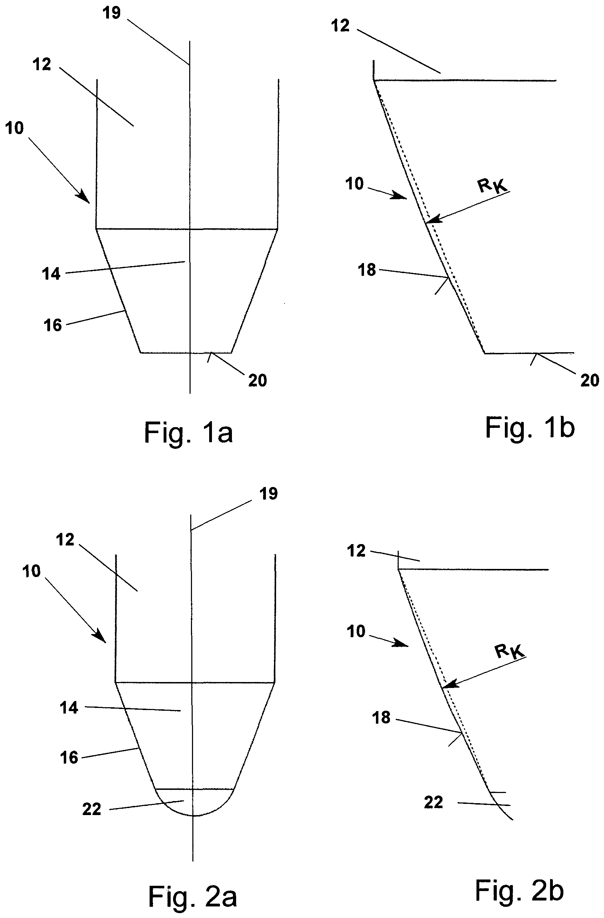

Bei der Ausführungsform eines für das erfindungsgemäße Verfahren vorgesehenen Werkzeuges 10, die in den Fig. 1a und 1b dargestellt ist, insbesondere eines Fräswerkzeuges, umfasst das Werkzeug 10 einen Schaft 12 und eine sich an den Schaft 12 anschließende Schneide 14. Die Schneide 14 ist an einer Flanke 16 des Werkzeuges 10 angeordnet und ist mit einer konisch-konvex ausgebildeten Schneidenkontur 18 versehen.

Unter der bereits vorstehend wie nachfolgend verwendeten Formulierung "Werkzeug mit konisch-konvex ausgebildeter Schneidenkontur" ist mithin ein Werkzeug 10 mit einer Form zu verstehen, die durch einen Konuswinkel, d.h. den Winkel zwischen der Werkzeugachse 19 des Werkzeuges 10 entsprechend der Vertikalen in den Fig. 1b und 2b und der konischen Kontur entsprechend der gestrichelten Linie in Fig. 1b und 2b, und eine konvexe Ausbeulung dieser Kontur mit einem Krümmungsradius R_{K} gebildet ist.

Mithin weist das Werkzeug 10 eine Schneidenkontur 18 von nahezu konischer Form auf, die nicht (linear) konisch verläuft, sondern gemäß einer geringfügig konvexen Form geringfügig ausgebeult ist. Auf diese Weise lässt sich die Oberflächenqualität an der ebenen Fläche eines Werkstückes vor allem aufgrund der Toleranz des Werkzeuges 10 gegenüber Maschinenungenauigkeiten erheblich verbessern. Zugleich lassen sich jedoch Vorteile eines rein konisch ausgebildeten Werkzeuges, wie etwa eine große Schrittweite (bei der Erfindung umso größer, je größer der Krümmungsradius R_{K} ist) oder eine günstige kollisionsvermeidende Eigenschaft einer rein konischen Schneidenkontur, durch welche der Werkzeugschaft und der Werkzeughalter beim Anschmiegen weit von der Ebene weggeneigt werden, ausnutzen.

Die ebene Fläche 30 oder die mindestens zwei Bearbeitungssegmente 44, 44', 44'' der ebenen Fläche 30 wird/werden durch ein Werkzeug 10, dessen konisch-konvex ausgebildete Schneidenkontur 18 an der Flanke 16 des Werkzeuges 10 durch eine konische Kontur mit einem Konuswinkel zwischen der konischen Kontur und der Achse des Werkzeuges 10 und eine von der konischen Kontur ausgehende konvexe Ausbeulung gebildet ist, bearbeitet.

Als besonders vorteilhaft hat sich eine konisch-konvex ausgebildete Schneidenkontur 18 an der Flanke 16 des Werkzeuges 10, die als Kreissegment oder Ellipsensegment mit einem großen Krümmungsradius R_{K}, insbesondere R_{K} ≥ 250 mm, ganz bevorzugt ≥ 500 mm, ausgestaltet ist, erwiesen.

Weiter kann die konisch-konvex ausgebildete Schneidenkontur 18 an der Flanke 16 des Werkzeuges 10 in vorteilhafter Weise als Kreissegment, Ellipsensegment oder Kurvensegment mit einem konstanten oder variierenden Krümmungsradius R_{K} ausgebildet sein.

Bei der vorliegenden Ausführungsform nach den Fig. 1a und 1b ist die konisch-konvex ausgebildete Schneidenkontur 18 an der Flanke 16 des Werkzeuges 10 symmetrisch, d.h. derart ausgebildet, dass in der Mitte die Abweichung zum flachen Verlauf am größten ist. Ohne im Einzelnen dargestellt zu sein, kann die die konisch-konvex ausgebildete Schneidenkontur 18 allerdings ebenso asymmetrisch ausgebildet sein.

Wie die Fig. 1a und 1b zeigen, ist die konisch-konvex ausgebildete Schneidenkontur 18 an der Flanke 16 des Werkzeuges 10 unmittelbar benachbart zu dem Schaft 12 des Werkzeuges 10 angeordnet.

Zudem geht die konisch-konvex ausgebildete Schneidenkontur 18 in eine flache Stirnfläche 20 bzw. Stirnseite bzw. Stirn des Werkzeuges 10 über, mündet quasi in diese ein.

Die Ausführungsform des für das erfindungsgemäße Verfahren vorgesehenen Werkzeuges 10, die in den Fig. 2a und 2b dargestellt ist, unterscheidet sich von derjenigen der Fig. 1a und 1b lediglich darin, dass das Werkzeug 10 anstelle einer flachen Stirnfläche 20 zusätzlich mit einer kugelförmigen Stirnfläche 22 bzw. Stirnseite bzw. Stirn ausgestattet ist. Die konisch-konvex ausgebildete Schneidenkontur 18 geht mithin in eine kugelförmige Stirnfläche 22 bzw. Stirnseite bzw. Stirn des Werkzeuges 10 über.

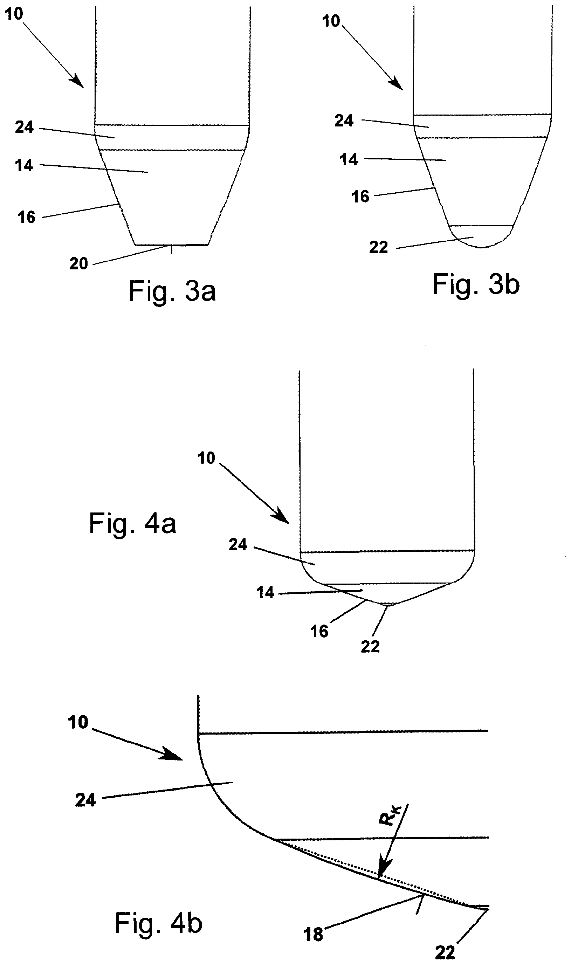

In den Fig. 3a und 3b ist eine noch weitere Ausführung des für das erfindungsgemäße Verfahren vorgesehenen Werkzeuges 10 vorgestellt, bei welcher die konisch-konvex ausgebildete Schneidenkontur 18 an der Flanke 16 des Werkzeuges 10 mittelbar benachbart zu dem Schaft 12 des Werkzeuges 10 angeordnet ist. Dabei ist ein zusätzlicher, verrundeter Übergang 24 zwischen dem Schaft 12 und der Flanke 16 des Werkzeuges 10 vorgesehen.

Darüber hinaus zeigen die Fig. 4a und 4b eine weitere beispielhafte Ausführungsform eines Werkzeuges 10, welche insbesondere für die Bearbeitung von im Wesentlichen horizontalen ebenen Flächen 30, beispielsweise Bodenflächen von Taschen, geeignet ist. Die konisch-konvex ausgebildete Schneidenkontur 18 an der Flanke 16 des Werkzeuges 10 verläuft hier mit einer steileren Ausrichtung (der Konuswinkel der zugrunde liegenden konischen Kontur ist größer). Bei der Ausführungsform der Fig. 4a und 4b ist das Werkzeug 10 mit kugelförmiger Stirnfläche 22 bzw. Stirnseite bzw. Stirn gemäß den Fig. 2a und 2b und mit zusätzlichem, verrundetem Übergang 24 zwischen dem Schaft 12 und der Flanke 16 gemäß den Fig. 3a und 3b versehen. Ohne im Einzelnen dargestellt zu sein, sind Ausführungsformen ohne diese zusätzlichen Formelemente oder in anderer Ausgestaltung ebenfalls ohne weiteres möglich.

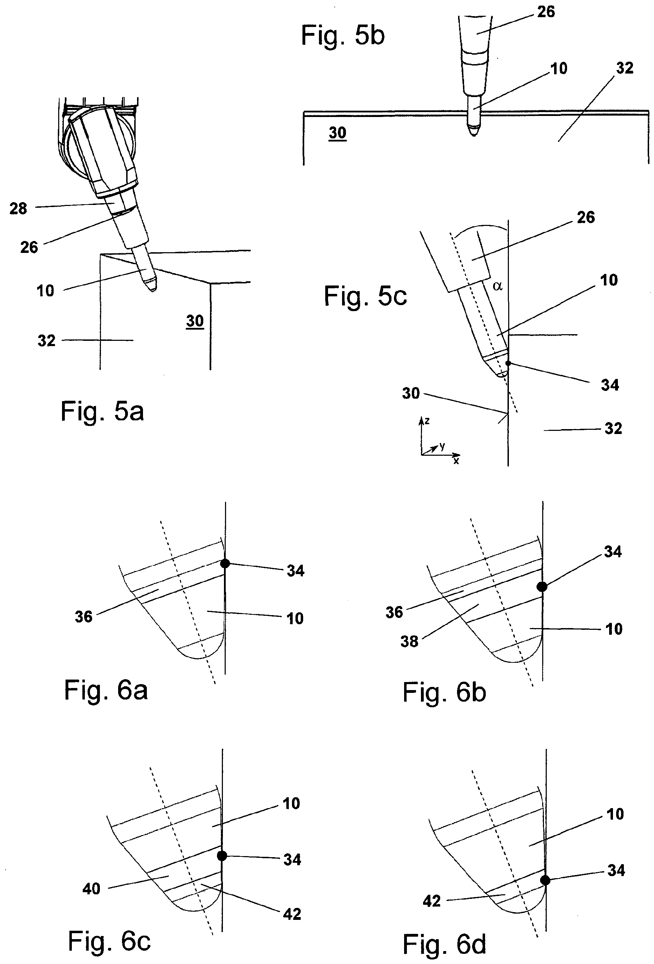

Im Einsatz an der Maschine ist das Werkzeug 10, wie in der Fig. 5a schematisch gezeigt ist, über den Schaft 12 in einem Halter 26 fixiert, welcher wiederum an die Maschinenspindel 28 angeschlossen ist. Die Haltergeometrie ist typabhängig. Die Ausspannlänge, d.h. die Länge, um welche das Werkzeug 10 aus dem Halter 26 herausragt, ist variabel.

Das erfindungsgemäße Verfahren eignet sich in ganz vorteilhafte Weise zur materialabtragenden Bearbeitung von ebenen Flächen 30 bzw. Ebenen eines Werkstückes 32 mittels des Werkzeuges 12 in Form insbesondere eines Fräswerkzeuges. Die Schneide 14 des Werkzeuges 10 weist eine konisch-konvex ausgebildete Form auf, die ausgenutzt wird, um eine effiziente und kollisionsfreie 5-Achs-Bearbeitung der ebenen Flächen zu erreichen. Das erfindungsgemäße Verfahren setzt sich aus folgenden einzelnen Verfahrensschritten zusammen, die rein beispielhaft anhand der besonders vorteilhaften Ausgestaltung des Werkzeuges 10 mit einer kugelförmigen Stirnfläche 22 und einem verrundeten Übergang 24 näher erläutert wird, ohne hierauf beschränkt zu sein:
In einem ersten Schritt wird entsprechend den Fig. 5a bis 8c die seitliche Neigung des Werkzeuges 10 zur ebenen Fläche 30 bzw. Ebene, d.h. die Neigung von der ebenen Fläche 30 weggerichtet, bestimmt. Ziel ist es dabei, die konisch-konvex ausgebildete Schneidenkontur 18 geeignet an die ebene Fläche 30 bzw. Ebene anzuschmiegen.

Wie die Fig. 5a bis 5c schematisch zeigen, wird die seitliche Neigung α gegenüber der Vertikalen bzw. im vorliegenden Ausführungsbeispiel gegenüber der vertikal verlaufenden ebenen Fläche 30 bzw. Ebene derart eingestellt, dass die Schneidenkontur 18 des Werkzeuges 10 die Ebene in einem Kontaktpunkt 34 berührt.

Die konisch-konvexe Form 18 der Schneide 14 grenzt den Neigungswinkel α auf ein relativ kleines Intervall ein. Die Wahl des Neigungswinkels α innerhalb dieses Intervalls ist beliebig und bestimmt die genaue Lage des Kontaktpunktes 34 am Werkzeug 10.

Vorteilhafte Kontaktpunkte 34 sind durch Wahl entsprechender Neigungswinkel α in den Fig. 6a bis 6d dargestellt:
In der Fig. 6a befindet sich der Kontaktpunkt 34 der konisch-konvex ausgebildeten Schneidenkontur 18 an der Flanke 16 des Werkzeuges 10 auf der ebenen Fläche 30 in einem oberen, dem Schaft 12 des Werkzeuges 10 zugewandten Bereich 36. Bei dem Ausführungsbeispiel der Fig. 6a ist der Kontaktpunkt 34 zu dem verrundeten Übergang 24 unmittelbar benachbart.

In der Fig. 6b liegt der Kontaktpunkt 34 der konisch-konvex ausgebildeten Schneidenkontur 18 auf der ebenen Fläche 30 in einem Bereich 38 zwischen der Mitte der Schneidenkontur 18 und einem oberen Bereich 36, welcher dem Schaft 12 des Werkzeuges 10 zugewandt bzw. diesem benachbart ist.

In der Fig. 6c ist der Kontaktpunkt 34 der konisch-konvex ausgebildeten Schneidenkontur 18 auf der ebenen Fläche 30 in einem Bereich 40 angeordnet, welcher zwischen der Mitte der Schneidenkontur 18 und einem unteren Bereich 42, welcher der Stirnfläche 22 bzw. Stirnseite bzw. Stirn des Werkzeuges 10 zugewandt bzw. diesem benachbart ist, liegt.

In der Fig. 6d schließlich liegt der Kontaktpunkt 34 der konisch-konvex ausgebildeten Schneidenkontur 18 auf der ebenen Fläche 30 in einem unteren Bereich 42, welcher der Stirnfläche 22 bzw. Stirnseite bzw. Stirn des Werkzeuges 10 zugewandt ist. Bei dem Ausführungsbeispiel der Fig. 6d ist der Kontaktpunkt 34 zu der Stirnfläche 22 bzw. Stirnseite bzw. Stirn des Werkzeuges 10 unmittelbar benachbart.

Die Wahl und Bestimmung des Neigungswinkels α und damit des Kontaktpunktes 34 lässt sich in vielen Situationen in vorteilhafter, aber gleichsam unterschiedlicher Weise nutzen.

Um Übergangsbereiche zwischen ebenen Flächen 30 bzw. Ebenen exakter herauszuarbeiten, ist bei einer Bearbeitung die Wahl des Kontaktpunktes 34, wie in der Fig. 6a gezeigt, von Vorteil, wobei der Winkel zwischen den beiden angrenzenden Flächen sehr groß ist.

Bei einer zeilenweisen Bearbeitung einer ebenen Fläche 30 bzw. Ebene von unten nach oben ist wiederum ein Kontaktpunkt 34 in oder oberhalb der Mitte, wie in der Fig. 6b gezeigt, bevorzugt, da eine optimale Überlappung aufeinander folgender Zeilen sichergestellt wird und das obere Ende der ebenen Fläche 30 besser bearbeitet werden kann.

Umgekehrt ist bei einer zeilenweisen Bearbeitung von oben nach unten ein Kontaktpunkt 34 in oder unterhalb der Mitte, wie in der Fig. 6c gezeigt, vorteilhaft, da so einerseits eine optimale Überlappung aufeinanderfolgender Zeilen sichergestellt wird (besonders vorteilhaft ist hierbei ein Kontaktpunkt 34, dessen Abstand zum unteren Ende der Schneidenkontur 18 gleich dem Abstand der Zeilen ist) und andererseits das untere Ende der ebenen Fläche 30 besser erreicht werden kann. Dies insbesondere in dem Fall, wenn dort eine Bodenfläche (nicht gezeigt) angrenzt.

Um Übergangsbereiche zwischen ebenen Flächen 30 bzw. Ebenen exakter herauszuarbeiten, kann bei einer Bearbeitung die Wahl des Kontaktpunktes 34, wie in der Fig. 6d gezeigt, von Vorteil sein, wobei der Winkel zwischen den beiden angrenzenden Flächen eher klein ist.

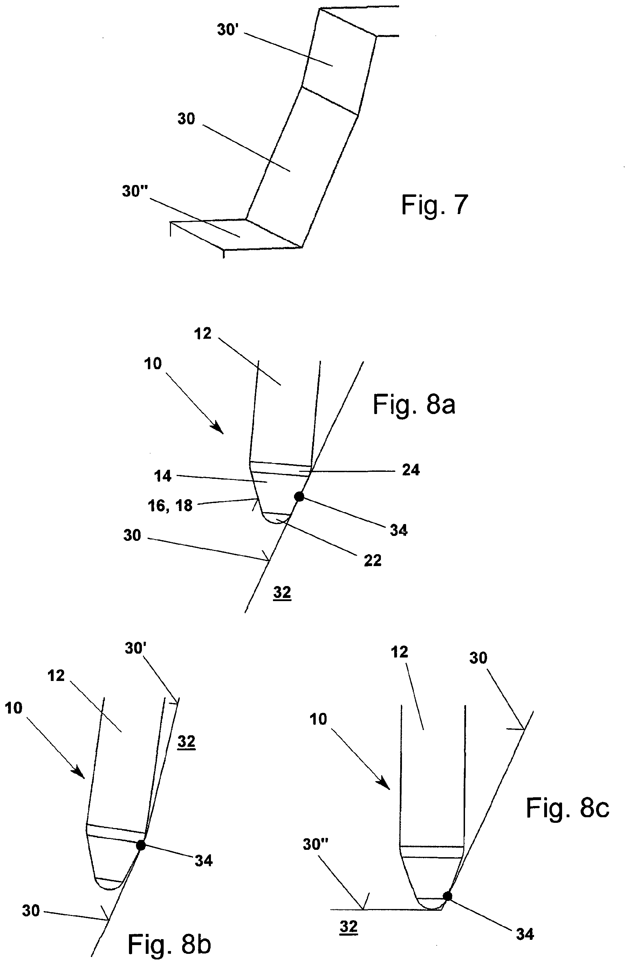

In der Fig. 7 ist beispielhaft eine ebene Fläche 30 bzw. Ebene dargestellt, deren Bearbeitung von zwei weiteren, oben und unten angrenzenden ebenen Flächen 30', 30'' erschwert wird.

Die ebene Fläche 30 wird, wie in der Fig. 8a gezeigt, mit einem Kontaktpunkt 34 im mittleren Bereich 38 oder 40 der Schneide 14 entsprechend den Fig. 6b oder 6c bearbeitet, was für die Oberflächengenauigkeit optimal ist.

Der Übergangsbereich zwischen der ebenen Fläche 30 und der darüber liegenden ebenen Fläche 30', wie in der Fig. 8b dargestellt, lässt sich mit einem Kontaktpunkt 34 im oberen Bereich 36 der Schneide 14 entsprechend der Fig. 6a noch besser erreichen. So kann auch der zusätzliche verrundete Übergang 24 zum Schaft 12 auf günstige Weise in Eingriff kommen.

Für den Übergangsbereich zwischen der ebenen Fläche 30 und der unteren ebenen Fläche 30'' bzw. Bodenfläche, wie in der Fig. 8c gezeigt, wiederum bietet sich ein Kontaktpunkt 34 im unteren Bereich 42 der Schneide 14 entsprechend der Fig. 6d an. So kann das Werkzeug 10 tiefer vordringen als unter Beibehaltung eines Kontaktpunktes 34, der sich in einem Bereich 38 oder 40 genau oder nahe, d.h. geringfügig oberhalb bzw. unterhalb, der Mitte der Schneide 14 befindet. Darüber hinaus kann so auch die zusätzliche kugelförmige Stirnfläche 22 auf günstige Weise in Eingriff kommen, um die Ecke herauszuarbeiten.

Die Anschmiegung der Schneide 14 an eine ebene Fläche 30 bzw. Ebene erfordert nur einen relativ kleinen Neigungswinkel α. Eine Bearbeitung der seitlichen ebenen Fläche 30 des Werkstücks 32 ist problemlos möglich. Insbesondere senkrechte ebene Flächen 30 bzw. Ebenen (auch innerhalb von Taschen) sind so sehr leicht, mit nur geringer Beanspruchung der Schwenkachsen, zugänglich. Darin liegt ein weiterer Vorteil des erfindungsgemäßen Verfahrens und Werkzeuges 10 gegenüber herkömmlichen Verfahren, bei denen das Werkzeug um 90° gedreht werden muss, um es auf einer solchen ebenen Fläche 30 platzieren zu können. Somit lässt sich auch die Problematik der Positionierung des Werkzeuges 10 im limitierten Arbeitsraum der Maschine bei großen Werkstücken 32 oder Bauteilen weitgehend lösen.

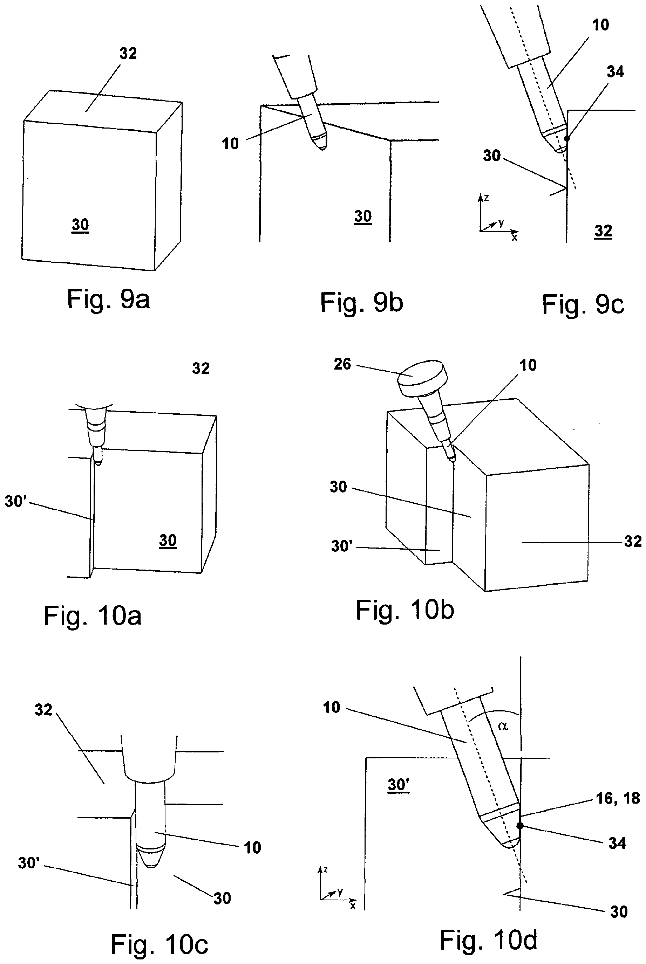

In einem zweiten Schritt des erfindungsgemäßen Verfahrens werden entsprechend den Fig. 9a bis 11g mögliche Kollisionen des Schaftes 12 oder des Halters 26 bzw. gegebenenfalls auch der Maschinenspindel 28 des Werkzeuges 10 mit der umgebenden Geometrie des Werkstückes 32 geprüft.

Ausgehend von der gewählten seitlichen Neigung α des Werkzeuges 10 wird demnach geprüft, ob eine vollständige Bearbeitung der ebenen Fläche 30 möglich ist, ob also die Schneide 14 des Werkzeuges 10 entlang der gesamten Fläche 30 bzw. Ebene geführt werden kann (zum Beispiel gemäß einer zeilenweisen Bearbeitung), ohne dass der Schaft 12 oder der Halter 26 des Werkzeuges 10 oder die Maschinenspindel 28 mit der umgebenden Bauteilgeometrie kollidiert. Werkzeug 10, Halter 26 und Werkstück 32 bzw. Bauteil, liegen vorzugsweise in Form von CAD-Modellen vor, so dass eine Kollisionsprüfung anhand üblicher Methoden zur Schnittberechnung erfolgen kann.

Im Folgenden sind verschiedene beispielhafte Situationen beschrieben, die bei der Kollisionsprüfung auftreten. Dabei bleibt die Beschreibung zur Vereinfachung auf senkrechte, rechteckige ebene Flächen 30 bzw. Ebenen beschränkt. Ohne im Einzelnen dargestellt zu sein, ist eine Übertragung auf geneigte und nicht-rechteckige ebene Flächen 30 bzw. Ebenen (zum Beispiel trapez- oder dreieckförmig oder mit kurvenförmiger Kontur) ohne weiteres möglich.

Entsprechend den Fig. 9a bis 9c wird die Bearbeitung der ebenen Fläche 30 durch angrenzende Flächen nicht behindert. Es treten keine Kollisionen auf.

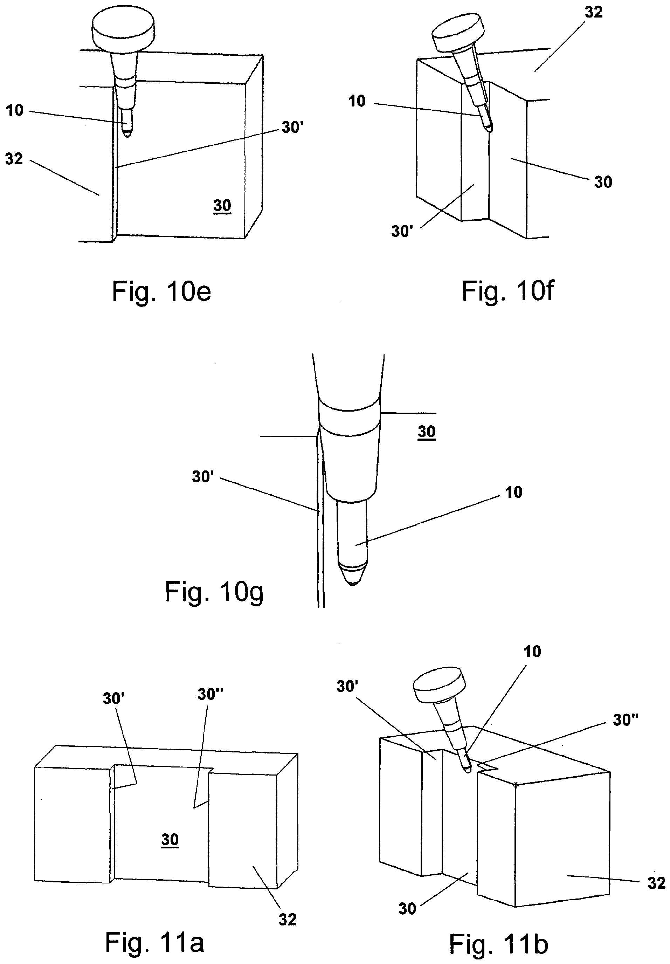

Entsprechend den Fig. 10a bis 10d wird der Zugang zur ebenen Fläche 30 bzw. Ebene einseitig durch eine links angrenzende Fläche 30' erschwert.

Ab einer gewissen Tiefe kollidiert dabei im Beispiel zunächst der Schaft 12 des Werkzeuges 10 mit der angrenzenden Fläche 30' entsprechend den Fig. 10a bis 10d. Wie aus den Fig. 10e bis 10g ersichtlich ist, treten weiter unten dann auch Kollisionen des Halters 26 des Werkzeuges 10 mit der angrenzenden Fläche 30' auf.

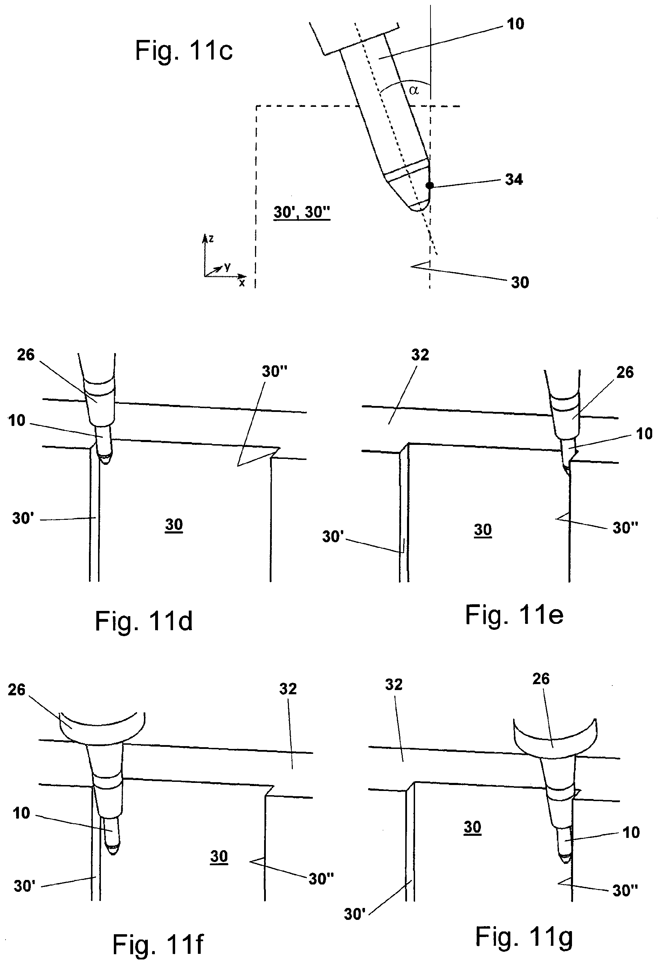

Entsprechend den Fig. 11a bis 11e wird der Zugang zur ebenen Fläche 30 bzw. Ebene zwei- bzw. beidseitig durch angrenzende Flächen 30', 30'' erschwert.

Dementsprechend treten beidseitig Kollisionen zunächst zwischen dem Schaft 12 des Werkzeuges 10 mit den angrenzenden Flächen 30', 30" entsprechend den Fig. 11d und 11e, weiter unten auch Kollisionen zwischen dem Halter 26 des Werkzeuges 10 mit den angrenzenden Flächen 30', 30'' entsprechend den Fig. 11f und 11g auf.

Dass die kollisionsbehafteten Flächen 30', 30'' in den dargestellten Fällen der ein- und zweiseitigen Kollision direkt an die zu bearbeitende ebene Fläche 30 angrenzen, ist nicht als Einschränkung zu verstehen. So könnten etwa die dargestellten Flächen 30' bzw. 30" auch jeweils aus mehreren Teilflächen bestehen, wovon gegebenenfalls nur nicht direkt an die ebene Fläche 30 angrenzende Teilflächen von Kollisionen betroffen wären. Ebenso sind auch solche Fälle vorgesehen, in denen zwar keine Kollisionen mit direkt angrenzenden Flächen 30', 30'' auftreten, wohl aber mit an diese Flächen wiederum angrenzenden oder auch nur indirekt benachbarten Flächen.

Wie die Fig. 10a bis 10g und 11a bis 11g verdeutlichen, kann die ebene Fläche 30 bzw. Ebene nicht vollständig ohne Kollisionen bearbeitet werden. Die Werkzeugbahnen müssten daher in den Ecken links und rechts verkürzt werden, wodurch aber überschüssiges Material an den Rändern der ebenen Fläche 30 bzw. Ebene verbleiben würde.

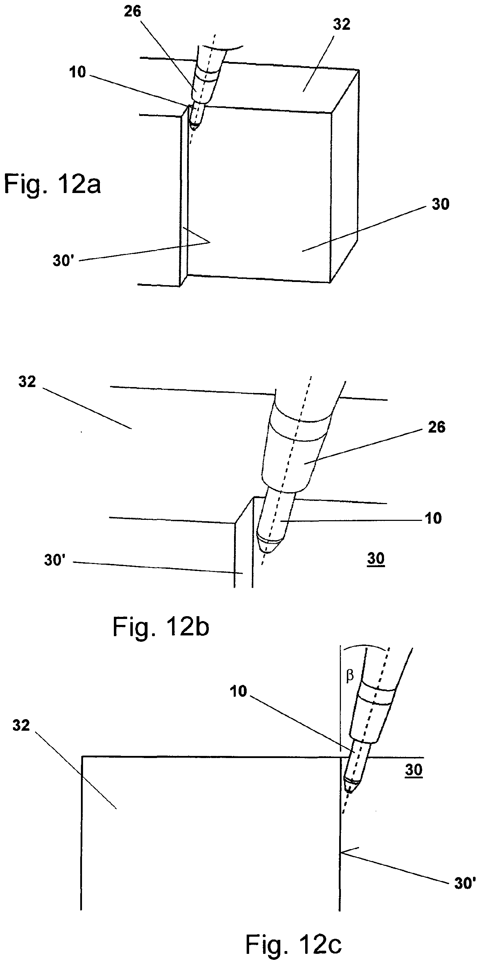

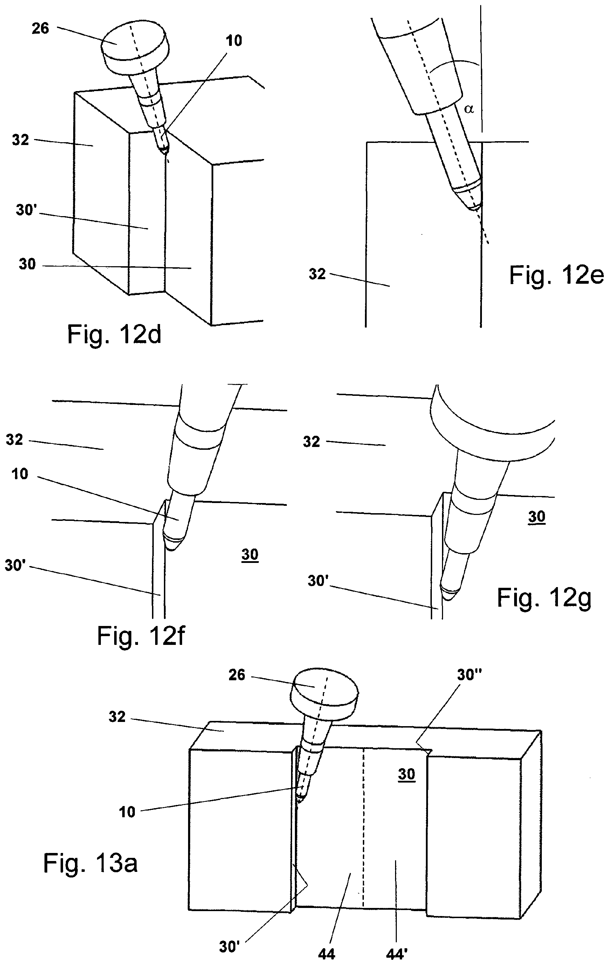

In einem dritten Schritt wird das Werkzeug 10 bei Feststellung von Kollisionen entsprechend den Fig. 12a bis 15b um einen geeigneten Schwenkwinkel β parallel zur ebenen Fläche 30 bzw. Ebene verschwenkt. Die in dem ersten Schritt bestimmte seitliche Neigung α wird dabei über die gesamte ebene Fläche 30 bzw. Ebene hinweg beibehalten, d.h. ist und bleibt konstant.

Um Kollisionen wie in den dargestellten Ausführungsbeispielen gemäß den Fig. 10a bis 10g bzw. 11a bis 11g zu vermeiden, wird das Werkzeug 10 entsprechend dem erfindungsgemäßen Verfahren um den Schwenkwinkel β parallel zur ebenen Fläche 10 bzw. Ebene gegen die jeweils betroffene Bauteilgeometrie verschwenkt.

Bezugnehmend auf die Fig. 12a bis 12e wird die Größe des Schwenkwinkels β so gewählt, dass weder Kollisionen mit Schaft 12 und/oder Halter 26 auftreten bzw. dass ein gewisser vordefinierter Mindestabstand zur betroffenen Bauteilgeometrie eingehalten wird. Dies ist für die in den Fig. 10a bis 10g gezeigten Situationen einer einseitigen Begrenzung bereits ausreichend. Die Fig. 12a bis 12e zeigen das Werkzeug 10 mit der geänderten Orientierung des Werkzeuges 10 an der Position der vormaligen Schaftkollision.

Die Fig. 12f und 12g zeigen das Werkzeug 10 mit der geänderten Orientierung im weiteren Verlauf der Bearbeitung. Es kann nun die ebene Fläche 30 bzw. Ebene nahezu vollständig, bis weit in die Ecke hinein, ohne Schaft- oder Halterkollisionen bearbeiten.

Für die anhand der Fig. 11a bis 11g beschriebenen Situationen einer zwei- oder beidseitigen Begrenzung ist dieses Vorgehen allerdings noch nicht ausreichend. Wenn bei einer beidseitig begrenzten ebenen Fläche 30 zwecks der Kollisionsvermeidung an einer (zum Beispiel linken) Seite ein Schwenkwinkel β parallel zur ebenen Fläche 30 eingestellt wird, behindert dieser Schwenkwinkel β gerade die Bearbeitung im Bereich der anderen (zum Beispiel rechten) Seite, und umgekehrt. Beim Ausführungsbeispiel nach den Fig. 11a bis 11g wird für die Kollisionsvermeidung links ein Schwenkwinkel β bestimmt, der das Werkzeug 10 samt Halter 26 von der links angrenzenden Fläche 30' weg, näher zur Mitte bzw. rechten Seite verschwenkt. Für die Bearbeitung der rechten Seite ist der Schwenkwinkel β nicht geeignet, da sonst frühzeitig eine Kollision, in diesem Fall des Halters 26, auftreten würde.

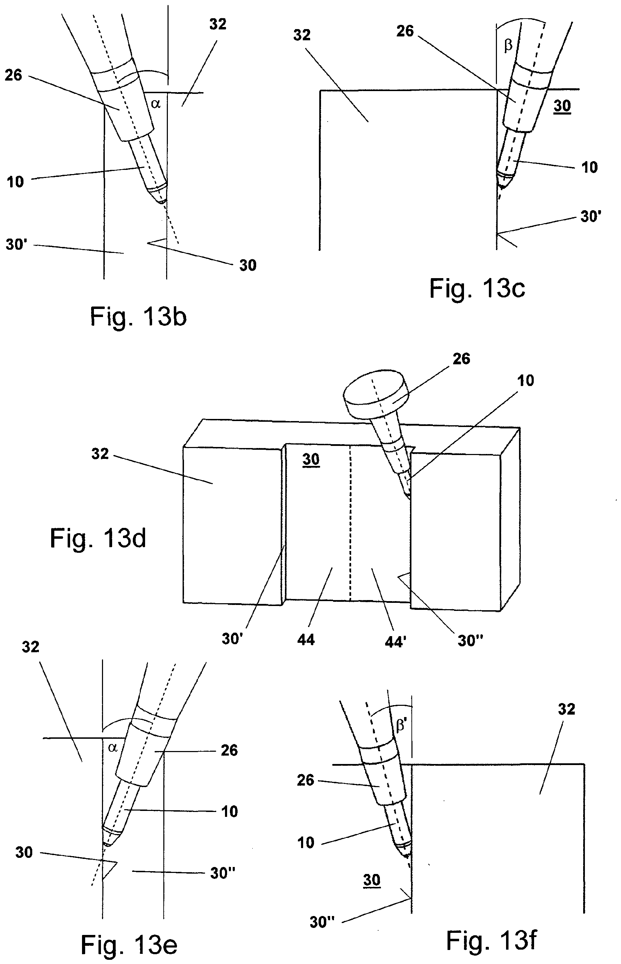

Bezugnehmend auf die Fig. 13a bis 13f ist daher bei dem erfindungsgemäßen Verfahren eine Aufteilung der ebenen Fläche 30 bzw. Ebene in einzelne Bearbeitungssegmente 44, 44' vorgesehen, wobei der Neigungswinkel α beibehalten wird, während für jedes Bearbeitungssegment 44, 44' ein anderer Schwenkwinkel β, β' eingestellt wird. Mit anderen Worten werden die ebene Fläche 30 bzw. Ebene bei Feststellung von Kollisionen in Bearbeitungssegmente 44, 44' aufgeteilt und jedem der Bearbeitungssegmente 44, 44' ein Schwenkwinkel β, β', um den das Werkzeug 10 parallel zur ebenen Fläche 30 bzw. Ebene verschwenkt wird, zur Vermeidung von Kollisionen zugeordnet bzw. zugewiesen.

Im einfachsten Fall wird, wie in der Fig. 13a dargestellt, die ebene Fläche 30 mittig oder im Wesentlichen mittig, also in zwei gleichgroße oder nahezu gleichgroße Bearbeitungssegmente 44, 44' aufgeteilt. Somit entstehen zwei jeweils nur noch einseitig begrenzte ebene Flächen 30 bzw. Ebenen.

Anschließend wird für jede der ebenen Flächen 30 ein eigener kollisionsvermeidender Schwenkwinkel β, β' parallel zur ebenen Fläche 30 entsprechend den Fig. 12a bis 12g bestimmt.

Bezugnehmend auf die Fig. 13a bis 13d wird das Werkzeug 10 nach Fertigstellung des ersten Bearbeitungssegmentes 44 vom Werkstück 32 abgehoben, umgeschwenkt und bezugnehmend auf die Fig. 13d bis 13f im zweiten Bearbeitungssegment 44' angesetzt.

Auf diese Weise ist eine vollständige und kollisionsfreie Bearbeitung der ebenen Fläche 30 möglich.

Beim Arbeiten mit unterschiedlichen Werkzeugorientierungen β, β' wirkt sich die annähernd konische bzw. konisch-konvex ausgebildete Schneidenkontur 18 des Werkzeuges 10 äußerst positiv aus. Viele Maschinen sind aufgrund von Ungenauigkeiten in den Schwenkachsen nicht in der Lage, in beiden Bearbeitungssegmenten 44, 44' mit den jeweils unterschiedlichen Schwenkwinkeln β, β' die vorgeschriebene seitliche Neigung α identisch einzustellen. Bei Verwendung einer üblichen, flach konischen Schneide des Werkzeuges 10 würde dies zu unterschiedlich ausgeprägten Treppeneffekten in den Bearbeitungssegmenten 44, 44' führen. Dies wäre besonders auffällig, da die Bearbeitungssegmente 44, 44' direkt aneinander angrenzen. Die konisch-konvex ausgebildete Schneidenkontur 18 der Schneide 14 des erfindungsgemäß ausgebildeten Werkzeuges 10 bzw. des erfindungsgemäßen Verfahrens kann im Gegensatz dazu gewisse Achsenungenauigkeiten der Maschine kompensieren und ermöglicht es so, die beschriebene Strategie zur Kollisionsvermeidung sinnvoll, unter Einhaltung einer geforderten Oberflächenqualität, durchzuführen.

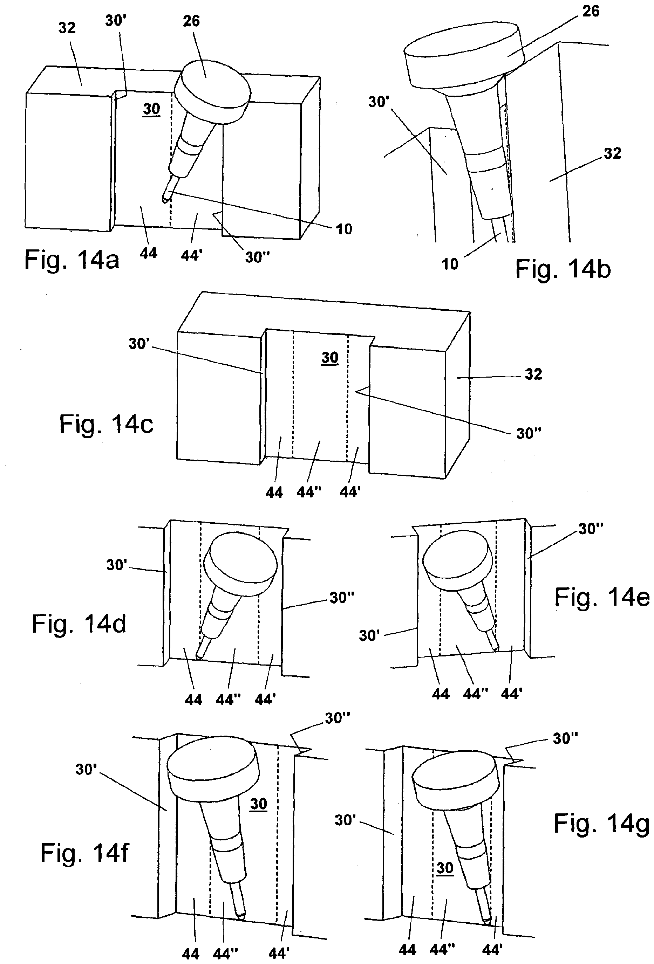

Wie in den Fig. 14a und 14c schematisch angedeutet ist, kann ungeachtet der vorhergehenden Ausführungen nicht immer ausgeschlossen werden, dass das Verschwenken des Werkzeuges 10 in bestimmten Situationen in einem Bearbeitungssegment 44 nicht doch zu Kollisionen des Schaftes 12 oder Halters 26 mit der an den zweiten Bearbeitungsbereich 44' angrenzenden ebenen Fläche 30'' bzw. Geometrie führen kann. Eine solche Situation ergibt sich insbesondere bei schmalen bzw. streifenförmigen, ebenen Flächen 30 bzw. Ebenen oder bei Verwendung eines verhältnismäßig breiten Halters 26 oder großer Schwenkwinkel β, β'.

Entsprechend den Fig. 14a und 14b wurde der bisher eingesetzte Halter 26 aus den bisherigen Beispielen durch einen größeren Halter 26 ersetzt. Erreicht die Stirnfläche 22 bzw. Stirnseite bzw. Stirn bzw. Spitze des Werkzeuges 10 insoweit eine gewisse Tiefe im ersten Bearbeitungssegment 44, so stößt der Halter 26 oben an die angrenzende Geometrie, etwa an die angrenzende ebene Fläche 30'' rechts von dem zweiten Bearbeitungssegment 44', an.

Wie in der Fig. 14c näher dargestellt, wird bei dem erfindungsgemäßen Verfahren in einem solchen Fall die ebene Fläche 32 bzw. Ebene ein weiteres Mal unterteilt. Man erhält zwei verkleinerte äußere Bearbeitungssegmente 44, 44' sowie ein zusätzliches Bearbeitungssegment 44'' in der Mitte.

Entsprechend den Fig. 14d und 14e wird das Werkzeug 10 in den beiden äußeren Bearbeitungssegmenten 44, 44' jeweils wie beschrieben parallel um einen Schwenkwinkel β, β' zur ebenen Fläche 30 bzw. Ebene verschwenkt. Durch die reduzierte Breite der Bearbeitungssegmente 44, 44' ist nun jeweils eine vollständige, kollisionsfreie Bearbeitung ermöglicht.

In den Fig. 14d und 14e ist zu erkennen, dass der Werkzeughalter 26 noch einen gewissen Abstand zur Bauteilgeometrie, d.h. den angrenzenden links- und rechtsseitigen Flächen 30', 30'', einhält, wenn sich die Stirnfläche 22 bzw. Spitze des Werkzeuges 10 am inneren Rand der Bearbeitungssegmente 44, 44' befindet. Somit kann die Aufteilung der ebenen Fläche 30 in die Bereiche basierend auf dem vordefinierten Minimalabstand zwischen Schaft 12 bzw. Halter 26 sowie der Bauteilgeometrie erfolgen. Die beiden äußeren Bearbeitungssegmente 44, 44' sind gerade so breit, dass dieser Minimalabstand an allen Positionen des Werkzeuges 10 eingehalten wird.

Wie aus den Fig. 14f und 14g hervorgeht, wird bei dieser Ausführung des erfindungsgemäßen Verfahrens im mittleren Bearbeitungssegment 44" ohne Schwenkwinkel β, β' gearbeitet, also ausschließlich mit einem seitlichen Neigungswinkel α analog zu einer freistehenden ebenen Fläche 30 entsprechend den Fig. 9a bis 9c.

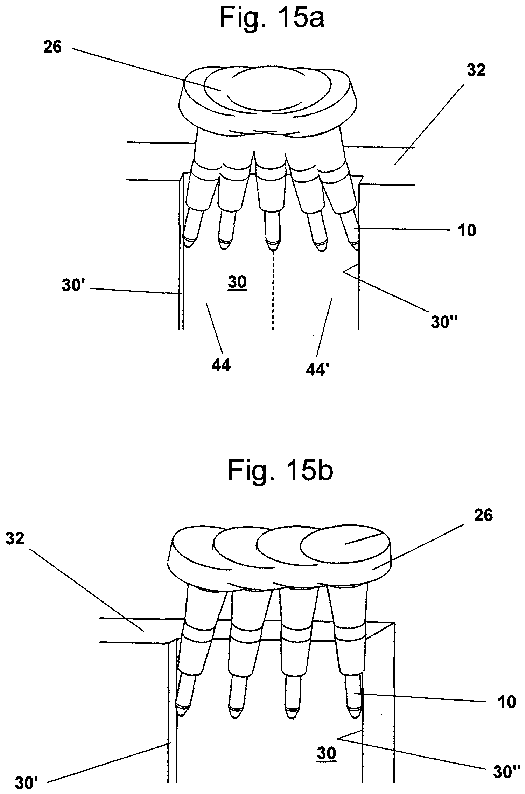

Anhand der Fig. 15a und 15b wird eine weitere vorteilhafte Abänderung des erfindungsgemäßen Verfahrens bei der zwei- bzw. beidseitigen Begrenzung erläutert, bei welcher die ebene Fläche 30 oder die mindestens zwei Bearbeitungssegmente 44, 44', 44'' der ebenen Fläche 30 von dem Werkzeug 10 zeilenweise bearbeitet wird/werden. Dabei wird der Schwenkwinkel β des Werkzeuges 10 des mindestens einen Bearbeitungssegmentes 44 kontinuierlich zu dem Schwenkwinkel β' des Werkzeuges 10 des mindestens anderen Bearbeitungssegmentes 44' interpoliert, und umgekehrt. Das Werkzeug 10 pendelt mithin zeilenweise über die Bearbeitungssegmente 44, 44', 44'' hinweg zwischen den berechneten Schwenkwinkeln β, β' kontinuierlich hin- und her.

Die Aufteilung der ebenen Fläche 30 bzw. Ebene in Bearbeitungssegmente 44, 44', 44'' und die Bestimmung der festen Schwenkwinkel β, β' stellt mithin lediglich einen Zwischenschritt dar.

Ein Abheben des Werkzeuges 10 vom Werkstück 32 mit anschließendem Umschwenken zwischen den Bearbeitungssegmenten 44, 44', 44" ist dabei nicht mehr erforderlich. Die kontinuierliche Bewegung des Werkzeuges 10 bietet zudem Vorteile bei der Kollisionsvermeidung, da nur in den Ecken - also dort wo es tatsächlich erforderlich ist - der maximale Schwenkwinkel β, β' erreicht wird, der potentiell Kollisionen mit den jeweils gegenüberliegenden Ecken verursachen könnte.

Entsprechend der Fig. 15b kann eine solche Bewegung des Werkzeuges 10 gleichermaßen vorteilhaft bei einer einseitigen Begrenzung der ebenen Fläche 30, wie in den Fig. 10a bis 10g veranschaulicht, sein. Der Schwenkwinkel β verläuft dann kontinuierlich zwischen 0° bzw. einem vordefinierten minimalen Winkel an der nicht begrenzten Seite und dem nach dem erfindungsgemäßen Verfahren berechneten Schwenkwinkel β bzw. β' zur Kollisionsvermeidung an der begrenzten Seite, und/oder umgekehrt.

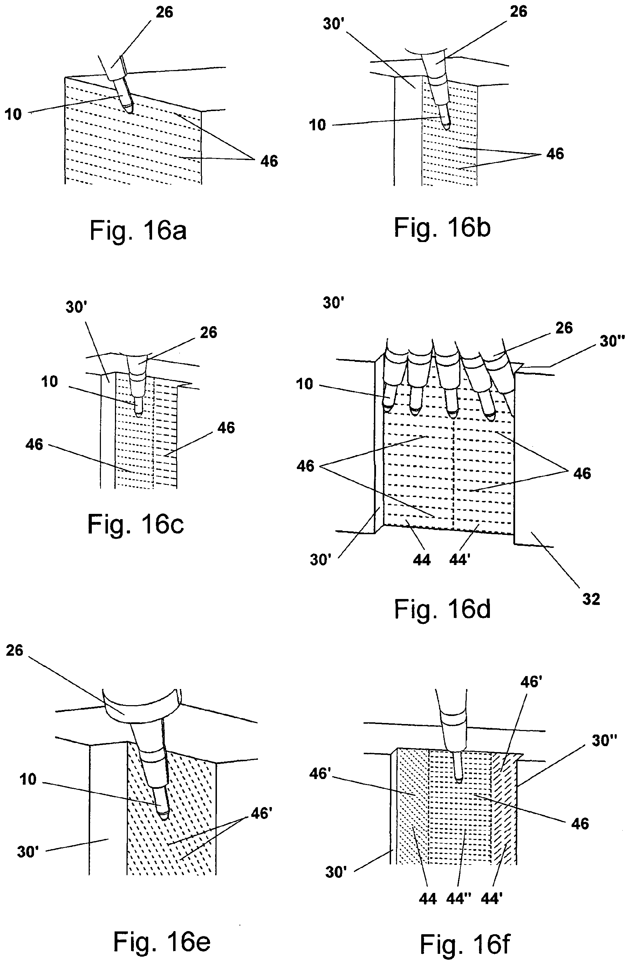

In einem vierten und letzten Schritt werden schließlich die Werkzeugbahnen 46, 46' entsprechend den Fig. 16a bis 16f für die Bearbeitungssegmente 44, 44', 44" berechnet.

Aufgrund der ersten drei Schritte liegen Informationen darüber vor, mit welchem Neigungswinkel α entgegen der ebenen Fläche 30 bzw. Ebene und welchem/welchen Schwenkwinkel/n β, β' parallel zur ebenen Fläche 30 bzw. Ebene das Werkzeug 10 in jedem Bearbeitungssegment 44, 44', 44" der ebenen Fläche 30 zu führen ist. Darauf aufbauend werden die Werkzeugbahnen 46, 46' berechnet. Die darin enthaltenen Positionsangaben beziehen sich immer auf einen bestimmten, festen Referenzpunkt am Werkzeug 10, üblicherweise den Mittelpunkt der Stirnfläche 22 oder einen anderen Punkt auf der Achse des Werkzeuges 10.

Bei der Berechnung der Werkzeugbahnen 46, 46' wird ein bestimmtes Muster zugrundegelegt.

Entsprechend den Fig. 16a bis 16d verlaufen die Werkzeugbahnen 46 bevorzugt horizontal oder im Wesentlichen horizontal. Mithin entsteht ein Muster jeweils aus horizontalen Zeilen.

Die Fig. 16a bis 16c zeigen beispielhafte Werkzeugbahnen 46 für verschiedene Ausführungsformen, nämlich die Fig. 16a bei Kollisionsfreiheit entsprechend den Fig. 9a bis 9c, die Fig. 16b bei einseitiger Begrenzung entsprechend den Fig. 10a bis 10g und die Fig. 16c bei zwei- bzw. beidseitiger Begrenzung entsprechend den Fig. 13a bis 13f. Dabei werden die beiden Bearbeitungssegmente 44, 44' separat nacheinander bearbeitet, wie durch die unterschiedlich gestrichelten Linien verdeutlicht ist.

Die Fig. 16d zeigt weiterhin Werkzeugbahnen 46 bei der Ausführungsform entsprechend den Fig. 15a, bei welcher eine zwischen den Bearbeitungssegmenten 44, 44' pendelnde Bewegung des Werkzeuges 10 ausgeführt wird. Dabei werden die Bearbeitungssegmente 44, 44' in jeder Zeile nacheinander bearbeitet.

Derartige horizontale Werkzeugbahnen 46, wie in den Fig. 16a bis 16d vorgestellt sind, sind bei der Ebenenbearbeitung in der Praxis am häufigsten anzutreffen.

Allerdings sind prinzipiell beliebige andere, wie beispielsweise diagonale, Muster für die Werkzeugbahnen 46, 46' entsprechend der Fig. 16e möglich. Ohne im Einzelnen dargestellt zu sein, ließen sich auch die Werkzeugbahnen 46 in den Bearbeitungssegmenten 44, 44' nur mit horizontalem, nur mit diagonalem oder ebenso einer Kombination aus horizontalem und diagonalem Muster abbilden.

Entsprechend der Fig. 16f können im Fall der Aufteilung in drei Bearbeitungsbereiche 44, 44', 44'' auch beide Muster gemischt verwendet werden. Im mittleren Bearbeitungssegment 44'' ist dabei ein horizontales Muster für die Werkzeugbahnen 46 als zweckmäßig vorgeschlagen, da dort ohne Schwenkwinkel β, β' gearbeitet wird, während in den Bearbeitungssegmenten 44. 44' diagonale Muster gewählt sind.

Bei allen Mustern der Werkzeugbahnen 46, 46' ist der Abstand zwischen den einzelnen Zeilen eine variable Größe. Er sollte offensichtlich nicht größer sein als die Länge der annähernd konischen Schneide 14, kann aber kleiner sein. Bei der Auswahl können verschiedene Parameter, etwa der Vorschub, die Drehzahl, die zu erzielende Oberflächengenauigkeit oder die Wahl des Kontaktpunktes 34, einfließen. Auch das Material des Werkstückes 32 kann eine Rolle spielen.

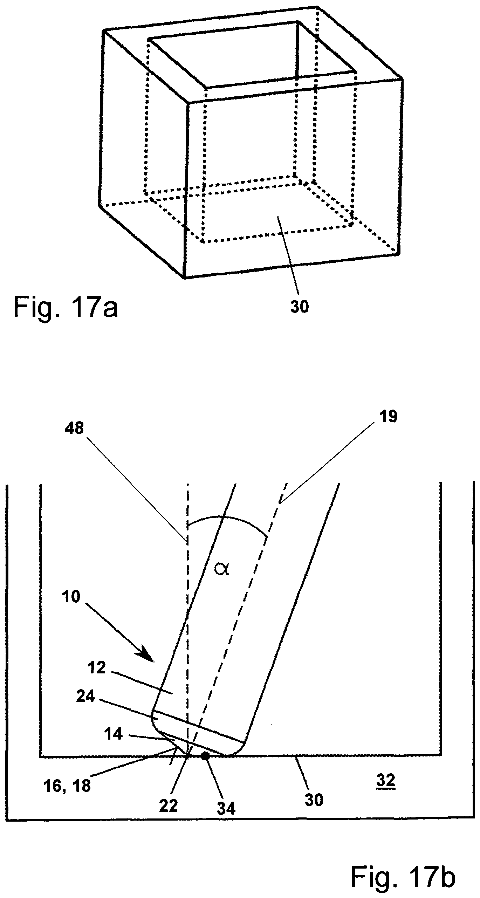

In der bisherigen Beschreibung des ersten Schrittes des erfindungsgemäßen Verfahrens entsprechend den Fig. 5a bis 8c wurde eine vertikale bzw. geneigte ebene Fläche 30 bzw. Ebene vorausgesetzt. Mit dem erfindungsgemäßen Verfahren können aber in gleicher Weise auch im Wesentlichen horizontale ebene Flächen 30 bzw. Ebenen, beispielsweise Bodenflächen von Taschen, bearbeitet werden, wobei die gleichen technologischen Vorteile erreicht werden. Dabei bietet sich besonders im Fall tiefliegender und daher schwer erreichbarer ebener Bodenflächen auf sehr vorteilhafte Weise der Einsatz der Ausführungsform des Werkzeugs 10 gemäß der Fig. 4a und 4b an, wie in den Fig. 17a und 17b dargestellt. Aufgrund der steiler ausgerichteten Schneidenkontur 18 erfordert das Werkzeug 10 zur Anschmiegung an die ebene Bodenfläche 30 nur einen geringen Neigungswinkel α zwischen der Werkzeugachse 19 gegenüber der Senkrechten 48 der Fläche 30. So kann auch bei tiefen, schwer zugänglichen Taschen die ebene Fläche 30 des Bodens leicht erreicht und bearbeitet werden.

Die Erfindung ist nicht auf die dargestellten Ausführungsformen des erfindungsgemäßen Verfahrens entsprechend den Fig. 1a bis 17b beschränkt. So ist es möglich, die Ausführungsformen des erfindungsgemäßen Verfahrens untereinander bzw. miteinander beliebig zu kombinieren. Weiterhin ist die Erfindung von der Art der Bearbeitung, d.h. insbesondere von einer Schrupp- oder Schlichtbearbeitung, gänzlich unabhängig, auch wenn sich das erfindungsgemäße Verfahren bevorzugt und ganz besonders gut für eine Verwendung bei der spanenden Schlichtbearbeitung eignet. Schließlich lassen sich mit dem erfindungsgemäßen Verfahren zur Vermeidung von ein- und/oder zweiseitiger Kollision ebene Flächen von beliebiger Art, Größe, Form und/oder Anordnung, wie zum Beispiel senkrechte, beliebig geneigte und horizontale ebene Flächen 30 bzw. Ebenen von beispielsweise rechteckiger, nicht-rechteckiger, etwa trapez- oder dreieckförmiger oder kurvenförmiger Kontur, insbesondere Bodenflächen von Taschen, bearbeiten.

## Patentansprüche

1. Verfahren zur materialabtragenden Bearbeitung von Flächen eines Werkstückes (32) mittels eines Werkzeuges (10), insbesondere eines Fräswerkzeuges, das gegenüber einer Fläche seitlich geneigt (α) auf der Fläche geführt und kollisionsfrei bewegt wird, **dadurch gekennzeichnet, dass** das Verfahren zur materialabtragenden Bearbeitung von ebenen Flächen (30) vorgesehen ist, wobei die ebene Fläche (30) mittels eines mit einem Kontaktpunkt (34) auf der ebenen Fläche (30) geführten Werkzeuges (10) mit konisch-konvex ausgebildeter Schneidenkontur (18) an einer Flanke (16) des Werkzeuges (10) und zur Vermeidung einer einseitigen Kollision vollständig von dem Werkzeug (10) mit einem Schwenkwinkel (β) parallel zu der ebenen Fläche (30) oder zur Vermeidung einer zweiseitigen Kollision von dem Werkzeug (10) mit mindestens zwei voneinander unterschiedlichen Schwenkwinkeln (β, β') parallel zu der ebenen Fläche (30) bearbeitet wird, wobei die ebene Fläche (30) zur Vermeidung der zweiseitigen Kollision in mindestens zwei Bearbeitungssegmente (44, 44', 44'') aufgeteilt wird und jedem der mindestens zwei Bearbeitungssegmente (44, 44', 44") ein individueller Schwenkwinkel (β, β') des Werkzeuges (10) zur Kollisionsvermeidung zugeordnet wird.

2. Verfahren nach Anspruch 1, **dadurch gekennzeichnet, dass** das Werkzeug (10) gegenüber der ebenen Fläche (30) seitlich geneigt wird, derart, dass der Kontaktpunkt (34) der konisch-konvex ausgebildeten Schneidenkontur (18) an der Flanke (16) des Werkzeuges (10) auf der ebenen Fläche (30) in einem oberen, dem Schaft (12) des Werkzeuges (10) zugewandten Bereich (36) liegt.

3. Verfahren nach Anspruch 1, **dadurch gekennzeichnet, dass** das Werkzeug (10) zeilenweise von unten nach oben über die ebene Fläche (30) geführt wird und gegenüber der ebenen Fläche (30) seitlich geneigt wird, derart, dass der Kontaktpunkt (34) der konisch-konvex ausgebildeten Schneidenkontur (18) an der Flanke (16) des Werkzeuges (10) auf der ebenen Fläche (30) in einem Bereich (38) zwischen der Mitte der Schneidenkontur (18) und einem oberen, dem Schaft (12) des Werkzeuges (10) zugewandten Bereich (36) liegt.

4. Verfahren nach Anspruch 1, **dadurch gekennzeichnet, dass** das Werkzeug (10) zeilenweise von oben nach unten über die ebene Fläche (30) geführt wird und gegenüber der ebenen Fläche (30) seitlich geneigt wird, derart, dass der Kontaktpunkt (34) der konisch-konvex ausgebildeten Schneidenkontur (18) an der Flanke (16) des Werkzeuges (10) auf der ebenen Fläche (30) in einem Bereich (40) zwischen der Mitte der Schneidenkontur (18) und einem unteren, der Stirnfläche (20, 22) des Werkzeuges (10) zugewandten Bereich (42) liegt.

5. Verfahren nach Anspruch 1, **dadurch gekennzeichnet, dass** das Werkzeug (10) gegenüber der ebenen Fläche (30) seitlich geneigt wird, derart, dass der Kontaktpunkt (34) der konisch-konvex ausgebildeten Schneidenkontur (18) an der Flanke (16) des Werkzeuges (10) auf der ebenen Fläche (30) in einem unteren, der Stirnfläche (20, 22) des Werkzeuges (10) zugewandten Bereich (42) liegt.

6. Verfahren nach einem der Ansprüche 1 bis 5, **dadurch gekennzeichnet, dass** die seitliche Neigung (α) des Werkzeuges (10) gegenüber der ebenen Fläche (30) während der gesamten Bearbeitung unverändert beibehalten wird.

7. Verfahren nach einem der Ansprüche 1 bis 6, **dadurch gekennzeichnet, dass** die Kollisionsfreiheit und mögliche ein- und/oder zweiseitige Kollisionen mit der Geometrie des Werkstückes (32) geprüft wird.

8. Verfahren nach einem der Ansprüche 1 bis 7, **dadurch gekennzeichnet, dass** die Werkzeugbahn/en (46) des Werkzeuges (10) für die ebene Fläche (30) und/oder die mindestens zwei Bearbeitungssegmente (44, 44', 44'') berechnet wird/werden.

9. Verfahren nach einem der Ansprüche 1 bis 8, **dadurch gekennzeichnet, dass** das Werkzeug (10) zeilenweise über die ebene Fläche (30) oder die mindestens zwei Bearbeitungssegmente (44, 44', 44'') der ebenen Fläche (30) geführt wird.

10. Verfahren nach einem der Ansprüche 1 bis 9, **dadurch gekennzeichnet, dass** das Werkzeug (10) in horizontalen und/oder diagonalen Zeilen über die ebene Fläche (30) oder die mindestens zwei Bearbeitungssegmente (44, 44', 44'') der ebenen Fläche (30) geführt wird.

11. Verfahren nach einem der Ansprüche 1 bis 10, **dadurch gekennzeichnet, dass** die ebene Fläche (30) oder die mindestens zwei Bearbeitungssegmente (44, 44', 44'') der ebenen Fläche (30) von dem Werkzeug (10) zeilenweise bearbeitet wird/werden, wobei der Schwenkwinkel (β) des Werkzeuges (10) des mindestens einen Bearbeitungssegmentes (44) kontinuierlich zu dem Schwenkwinkel (β') des Werkzeuges (10) des mindestens anderen Bearbeitungssegmentes (44') interpoliert wird, und umgekehrt.

12. Verfahren nach einem der Ansprüche 1 bis 11, **dadurch gekennzeichnet, dass** die ebene Fläche (30) oder die mindestens zwei Bearbeitungssegmente (44, 44', 44'') der ebenen Fläche (30) mittels eines Werkzeuges (10), dessen konisch-konvex ausgebildete Schneidenkontur (18) an der Flanke (16) des Werkzeuges (10) durch eine konische Kontur mit einem Konuswinkel zwischen der konischen Kontur und der Achse des Werkzeuges (10) und eine von der konischen Kontur ausgehende konvexe Ausbeulung gebildet ist, bearbeitet wird/werden.

13. Verfahren nach einem der Ansprüche 1 bis 12, **dadurch gekennzeichnet, dass** die ebene Fläche (30) oder die mindestens zwei Bearbeitungssegmente (44, 44', 44'') der ebenen Fläche (30) mittels eines Werkzeuges (10), dessen konisch-konvex ausgebildete Schneidenkontur (18) an der Flanke (16) des Werkzeuges (10) als Kreissegment oder Ellipsensegment mit einem großen Krümmungsradius R_{K}, insbesondere R_{K} ≥ 250 mm, ganz vorzugsweise R_{K} ≥ 500 mm, ausgebildet ist, bearbeitet wird/werden.

14. Verfahren nach einem der Ansprüche 1 bis 13, **dadurch gekennzeichnet, dass** die ebene Fläche (30) oder die mindestens zwei Bearbeitungssegmente (44, 44', 44'') der ebenen Fläche (30) mittels eines Werkzeuges (10), dessen konisch-konvex ausgebildete Schneidenkontur (18) an der Flanke (16) des Werkzeuges (10) als Kreissegment, Ellipsensegment oder Kurvensegment mit einem konstanten oder variierenden Krümmungsradius R_{K} ausgebildet ist, bearbeitet wird/werden.

15. Verfahren nach einem der Ansprüche 1 bis 14, **dadurch gekennzeichnet, dass** die ebene Fläche (30) oder die mindestens zwei Bearbeitungssegmente (44, 44', 44'') der ebenen Fläche (30) mittels eines Werkzeuges (10), dessen konisch-konvex ausgebildete Schneidenkontur (18) an der Flanke (16) des Werkzeuges (10) symmetrisch oder asymmetrisch ausgebildet ist, bearbeitet wird/werden.

16. Verfahren nach einem der Ansprüche 1 bis 15, **dadurch gekennzeichnet, dass** die ebene Fläche (30) oder die mindestens zwei Bearbeitungssegmente (44, 44', 44'') der ebenen Fläche (30) mittels eines Werkzeuges (10), dessen konisch-konvex ausgebildete Schneidenkontur (18) an der Flanke (16) des Werkzeuges (10) unmittelbar in den Schaft (12) des Werkzeuges (10) übergeht oder mittelbar über einen verrundeten Übergang (24) in den Schaft (12) des Werkzeuges (10) übergeht, bearbeitet wird/werden.

17. Verfahren nach einem der Ansprüche 1 bis 16, **dadurch gekennzeichnet, dass** die ebene Fläche (30) oder die mindestens zwei Bearbeitungssegmente (44, 44', 44'') der ebenen Fläche (30) mittels eines Werkzeuges (10), dessen konisch-konvex ausgebildete Schneidenkontur (18) an der Flanke (16) des Werkzeuges (10) in eine flache Stirnfläche (20) des Werkzeuges (10) übergeht oder in eine kugelförmige Stirnfläche (22) des Werkzeuges (10) übergeht, bearbeitet wird/werden.

## Claims

1. A method for machining surfaces of a workpiece (32) using a tool (10), in particular a milling tool, that is guided on the surface at a lateral inclination (α) with respect to the surface and moved in a collision-free manner, **characterized in that** the method is provided for machining flat surfaces (30), wherein the flat surface (30) is machined using a tool (10), having a cutting contour (18) with a conically convex design, that is guided on the flat surface (30) with a contact point (34) on a flank (16) of the tool (10), and to avoid a one-sided collision is completely machined by the tool (10) with a pivot angle (β) in parallel to the flat surface (30), or to avoid a two-sided collision is machined by the tool (10) with at least two different pivot angles (β, β') in parallel to the flat surface (30), wherein the flat surface (30) is divided into at least two machining segments (44, 44', 44") to avoid the two-sided collision, and an individual pivot angle (β, β') of the tool (10) is assigned to each of the at least two machining segments (44, 44', 44") in order to avoid a collision.

2. The method according to Claim 1, **characterized in that** the tool (10) is laterally inclined with respect to the flat surface (30) in such a way that the contact point (34) of the cutting contour (18), having a conically convex design, on the flank (16) of the tool (10) rests on the flat surface (30) in an upper area (36) facing the shaft (12) of the tool (10).

3. The method according to Claim 1, **characterized in that** the tool (10) is guided in multiple passes from bottom to top across the flat surface (30), and is laterally inclined with respect to the flat surface (30) in such a way that the contact point (34) of the cutting contour (18), having a conically convex design, on the flank (16) of the tool (10) rests on the flat surface (30) in an area (38) between the middle of the cutting contour (18) and an upper area (36) facing the shaft (12) of the tool (10).

4. The method according to Claim 1, **characterized in that** the tool (10) is guided in multiple passes from top to bottom across the flat surface (30), and is laterally inclined with respect to the flat surface (30) in such a way that the contact point (34) of the cutting contour (18), having a conically convex design, on the flank (16) of the tool (10) rests on the flat surface (30) in an area (40) between the middle of the cutting contour (18) and a lower area (42) facing the end face (20, 22) of the tool (10).

5. The method according to Claim 1, **characterized in that** the tool (10) is laterally inclined with respect to the flat surface (30) in such a way that the contact point (34) of the cutting contour (18), having a conically convex design, on the flank (16) of the tool (10) rests on the flat surface (30) in a lower area (42) facing the front face (20, 22) of the tool (10).

6. The method according to one of Claims 1 to 5, **characterized in that** the lateral inclination (α) of the tool (10) with respect to the flat surface (30) is maintained unchanged throughout the machining.

7. The method according to one of Claims 1 to 6, **characterized in that** the absence of collisions and possible one-sided and/or two-sided collisions with the geometry of the workpiece (32) are checked.

8. The method according to one of Claims 1 to 7, **characterized in that** the tool path/s (46) of the tool (10) is/are calculated for the flat surface (30) and/or the at least two machining segments (44, 44', 44").

9. The method according to one of Claims 1 to 8, **characterized in that** the tool (10) is guided in multiple passes across the flat surface (30) or the at least two machining segments (44, 44', 44") of the flat surface (30).

10. The method according to one of Claims 1 to 9, **characterized in that** the tool (10) is guided in horizontal and/or diagonal passes across the flat surface (30) or the at least two machining segments (44, 44', 44") of the flat surface (30).

11. The method according to one of Claims 1 to 10, **characterized in that** the flat surface (30) or the at least two machining segments (44, 44', 44") of the flat surface (30) is/are machined by the tool (10) in multiple passes, with the pivot angle (β) of the tool (10) of the at least one machining segment (44) being continuously interpolated with the pivot angle (β') of the tool (10) of the at least other machining segment (44'), and vice versa.

12. The method according to one of Claims 1 to 11, **characterized in that** the flat surface (30) or the at least two machining segments (44, 44', 44") of the flat surface (30) is/are machined using a tool (10) whose cutting contour (18), having a conically convex design, on the flank (16) of the tool (10) is formed by a conical contour having a cone angle between the conical contour and the axis of the tool (10), and a convex bulge going out from the conical contour.

13. The method according to one of Claims 1 to 12, **characterized in that** the flat surface (30) or the at least two machining segments (44, 44', 44") of the flat surface (30) is/are machined using a tool (10) whose cutting contour (18), having a conically convex design, on the flank (16) of the tool (10) is designed as a circular segment or ellipsoidal segment having a large radius of curvature R_{K}, in particular R_{K} ≥ 250 mm, very preferably R_{K} ≥ 500 mm.

14. The method according to one of Claims 1 to 13, **characterized in that** the flat surface (30) or the at least two machining segments (44, 44', 44") of the flat surface (30) is/are machined using a tool (10) whose cutting contour (18), having a conically convex design, on the flank (16) of the tool (10) is designed as a circular segment, ellipsoidal segment, or curve segment having a constant or varying radius of curvature R_{K}.

15. The method according to one of Claims 1 to 14, **characterized in that** the flat surface (30) or the at least two machining segments (44, 44', 44") of the flat surface (30) is/are machined using a tool (10) whose cutting contour (18), having a conically convex design, on the flank (16) of the tool (10) has a symmetrical or asymmetrical design.

16. The method according to one of Claims 1 to 15, **characterized in that** the flat surface (30) or the at least two machining segments (44, 44', 44") of the flat surface (30) is/are machined using a tool (10) whose cutting contour (18), having a conically convex design, on the flank (16) of the tool (10) merges directly into the shaft (12) of the tool (10), or merges indirectly into the shaft (12) of the tool (10) via a rounded transition (24).

17. The method according to one of Claims 1 to 16, **characterized in that** the flat surface (30) or the at least two machining segments (44, 44', 44") of the flat surface (30) is/are machined using a tool (10) whose cutting contour (18), having a conically convex design, on the flank (16) of the tool (10) merges into a flat end face (20) of the tool (10) or merges into a spherical end face (22) of the tool (10).

## Revendications

1. Procédé d'usinage par enlèvement de matière de surfaces d'une pièce (32) au moyen d'un outil (10), en particulier d'un outil de fraisage, qui est guidé sur une surface avec une inclinaison latérale (α) par rapport à la surface et déplacé sans collision, **caractérisé en ce que** le procédé est prévu pour l'usinage par enlèvement de matière de surfaces planes (30), la surface plane (30) étant usinée au moyen d'un outil (10) guidé sur la surface plane (30) avec un point de contact (34) et présentant un contour de taillant (18) de forme conique convexe sur un flanc (16) de l'outil (10) et, pour éviter une collision unilatérale, étant usinée complètement par l'outil (10) avec un angle de pivotement (β) parallèlement à la surface plane (30) ou, pour éviter une collision bilatérale, étant usinée par l'outil (10) avec au moins deux angles de pivotement différents l'un de l'autre (β, β') parallèlement à la surface plane (30), la surface plane (30) étant divisée en au moins deux segments d'usinage (44, 44', 44") pour éviter la collision bilatérale, et chacun desdits au moins deux segments d'usinage (44, 44', 44") étant associé à un angle de pivotement individuel (β, β') de l'outil (10) pour éviter une collision.

2. Procédé selon la revendication 1, **caractérisé en ce que** l'outil (10) est incliné latéralement par rapport à la surface plane (30) de telle sorte que le point de contact (34) du contour de taillant (18) de forme conique convexe sur le flanc (16) de l'outil (10) avec la surface plane (30) se trouve dans une zone supérieure (36) tournée vers la queue (12) de l'outil (10).

3. Procédé selon la revendication 1, **caractérisé en ce que** l'outil (10) est guidé ligne par ligne de bas en haut sur la surface plane (30) et est incliné latéralement par rapport à la surface plane (30) de telle sorte que le point de contact (34) du contour de taillant (18) de forme conique convexe sur le flanc (16) de l'outil (10) avec la surface plane (30) se trouve dans une zone (38) située entre le centre du contour de taillant (18) et une zone supérieure (36) tournée vers la queue (12) de l'outil (10).

4. Procédé selon la revendication 1, **caractérisé en ce que** l'outil (10) est guidé ligne par ligne de haut en bas sur la surface plane (30) et est incliné latéralement par rapport à la surface plane (30) de telle sorte que le point de contact (34) du contour de taillant (18) de forme conique convexe sur le flanc (16) de l'outil (10) avec la surface plane (30) se trouve dans une zone (40) située entre le centre du contour de taillant (18) et une zone inférieure (42) tournée vers la surface frontale (20, 22) de l'outil (10).

5. Procédé selon la revendication 1, **caractérisé en ce que** l'outil (10) est incliné latéralement par rapport à la surface plane (30) de telle sorte que le point de contact (34) du contour de taillant (18) de forme conique convexe sur le flanc (16) de l'outil (10) avec la surface plane (30) se trouve dans une zone inférieure (42) tournée vers la surface frontale (20, 22) de l'outil (10).

6. Procédé selon l'une des revendications 1 à 5, **caractérisé en ce que** l'inclinaison latérale (α) de l'outil (10) par rapport à la surface plane (30) est maintenue inchangée pendant toute l'opération d'usinage.

7. Procédé selon l'une des revendications 1 à 6, **caractérisé en ce que** l'absence de collision et d'éventuelles collisions unilatérales et/ou bilatérales avec la géométrie de la pièce (32) sont contrôlées.

8. Procédé selon l'une des revendications 1 à 7, **caractérisé en ce que** la ou les trajectoires d'outil (46) de l'outil (10) est/sont calculée(s) pour la surface plane (30) et/ou lesdits au moins deux segments d'usinage (44, 44', 44").

9. Procédé selon l'une des revendications 1 à 8, **caractérisé en ce que** l'outil (10) est guidé ligne par ligne sur la surface plane (30) ou lesdits au moins deux segments d'usinage (44, 44', 44") de la surface plane (30).

10. Procédé selon l'une des revendications 1 à 9, **caractérisé en ce que** l'outil (10) est guidé en lignes horizontales et/ou diagonales sur la surface plane (30) ou lesdits au moins deux segments d'usinage (44, 44', 44") de la surface plane (30).

11. Procédé selon l'une des revendications 1 à 10, **caractérisé en ce que** la surface plane (30) ou lesdits au moins deux segments d'usinage (44, 44', 44") de la surface plane (30) sont usinés ligne par ligne par l'outil (10), l'angle de pivotement (β) de l'outil (10) dudit au moins un segment d'usinage (44) étant interpolé en continu en l'angle de pivotement (β') de l'outil (10) dudit au moins autre segment d'usinage (44') et inversement.

12. Procédé selon l'une des revendications 1 à 11, **caractérisé en ce que** la surface plane (30) ou lesdits au moins deux segments d'usinage (44, 44', 44") de la surface plane (30) sont usinés au moyen d'un outil (10) dont le contour de taillant (18) de forme conique convexe sur le flanc (16) de l'outil (10) est formé par un contour conique avec un angle conique entre le contour conique et l'axe de l'outil (10) et un renflement convexe partant du contour conique.

13. Procédé selon l'une des revendications 1 à 12, **caractérisé en ce que** la surface plane (30) ou lesdits au moins deux segments d'usinage (44, 44', 44") de la surface plane (30) sont usinés au moyen d'un outil (10) dont le contour de taillant (18) de forme conique convexe sur le flanc (16) de l'outil (10) est réalisé sous la forme d'un segment de cercle ou d'un segment d'ellipse ayant un grand rayon de courbure R_{K}, en particulier R_{K} ≥ 250 mm, plus préférentiellement R_{K} ≥ 500 mm.

14. Procédé selon l'une des revendications 1 à 13, **caractérisé en ce que** la surface plane (30) ou lesdits au moins deux segments d'usinage (44, 44', 44") de la surface plane (30) sont usinés au moyen d'un outil (10) dont le contour de taillant (18) de forme conique convexe sur le flanc (16) de l'outil (10) est réalisé sous la forme d'un segment de cercle, d'un segment d'ellipse ou d'un segment de courbe ayant un rayon de courbure R_{K} constant ou variable.

15. Procédé selon l'une des revendications 1 à 14, **caractérisé en ce que** la surface plane (30) ou lesdits au moins deux segments d'usinage (44, 44', 44") de la surface plane (30) sont usinés au moyen d'un outil (10) dont le contour de taillant (18) de forme conique convexe sur le flanc (16) de l'outil (10) est réalisé de manière symétrique ou asymétrique.

16. Procédé selon l'une des revendications 1 à 15, **caractérisé en ce que** la surface plane (30) ou lesdits au moins deux segments d'usinage (44, 44', 44") de la surface plane (30) sont usinés au moyen d'un outil (10) dont le contour de taillant (18) de forme conique convexe sur le flanc (16) de l'outil (10) se raccorde directement à la queue (12) de l'outil (10) ou se raccorde indirectement à la queue (12) de l'outil (10) par l'intermédiaire d'une transition arrondie (24).

17. Procédé selon l'une des revendications 1 à 16, **caractérisé en ce que** la surface plane (30) ou lesdits au moins deux segments d'usinage (44, 44', 44") de la surface plane (30) sont usinés au moyen d'un outil (10) dont le contour de taillant (18) de forme conique convexe sur le flanc (16) de l'outil (10) se raccorde à une surface frontale plate (20) de l'outil (10) ou à une surface frontale sphérique (22) de l'outil (10).
